# EUROPEAN PATENT SPECIFICATION

(11) **EP 2 659 035 B1**
(45) Date of publication and mention of the grant of the patent: **17.12.2014**
(21) Application number: 11818972.9
(22) Date of filing: 28.12.2011
(51) Int. Cl.: D01D 5/06, D01F 9/00, D03D 15/00, D04H 3/00

(54) **HYALURONAN FIBRES, METHOD OF PREPARATION THEREOF AND USE THEREOF**
HYALURONANFASERN, VERFAHREN ZU IHRER HERSTELLUNG UND VERWENDUNG
FIBRES EN HYALURONANE, PROCÉDÉ POUR LEUR PRÉPARATION ET LEUR UTILISATION

(30) Priority: 31.12.2010 CZ 20101001
(43) Date of publication of application: 06.11.2013
(73) Proprietor: Contipro Biotech s.r.o., 56102 Dolni Dobrouc (CZ)
(72) Inventor: BURGERT, Ladislav, CZ-530 02 Pardubice (CZ); HRDINA, Radim, CZ-530 03 Pardubice (CZ); MASEK, David, CZ-796 04 Prostejov (CZ); VELEBNY, Vladimir, CZ-564 02 Zamberk (CZ)
(74) Representative: Dvorakova, Martina
(86) International application number: PCT/CZ2011/000126
(87) International publication number: WO 2012/089179

(56) References cited:
- KR-A- 20080 062 092
- US-A1- 2010 310 631
- RUPPRECHT A: "Wet Spinning of Hyaluronic Acid. Preparation of Oriented Samples", ACTA CHEMICA SCANDINAVICA.SERIES B - ORGANIC CHEMISTRY AND BIOCHEMISTRY, MUNKSGAARD. COPENHAGEN, DK, vol. B33, no. 10, 1 January 1979 (1979-01-01), pages 779-780, XP002483473, ISSN: 0302-4369

## Description

### Field of the invention

The present invention relates to a method for preparing hyaluronic fibres by the wet and dry-wet spinning processes, further it relates to the fibres preparable by this method having the properties appropriate for textile processing.

### Background of the Invention

Hyaluronic acid (A) has the chemical structure of a linear polyelectrolyte composed of repeatedly altering units of β-(1,3)-D-glucuronic acid and β-(1,4)-N-acetyl-D-glukosamine repeating continually and creating long chains (-4GlcUAβ1-3GlcNAcβ1-)ₙ. Every repeating unit has one carboxyl group, four hydroxyl groups, and an acetamide group.

| | |
|---|---|
| 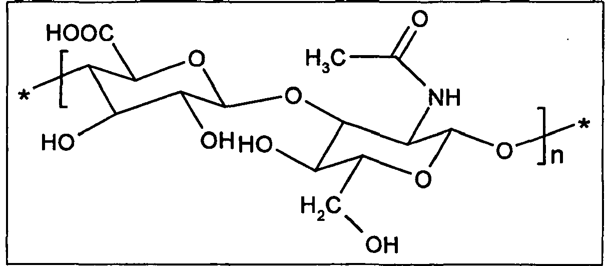 | A |

Primary and secondary hydroxyl groups are moderately acidic, and they can be ionized by alkali ionization, for example sodium hydroxide, where, however, pKₐ is above the value of 14. The carboxyl group is from the group of medium acids, neutralized by alkali into salts, hylauronates, e.g. sodium hyaluronate. The mixture of the salt and free acid is referred as hyaluronan. For example, pKₐ of the free form of hyaluronic acid in water varies around 3.45, in 0.2M NaCl it is 2.95 (L. 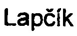 et al.: Chemické listy 85, 281-298, 1991).

Hyaluronic acid is characterized by high molecular weight of 5.10⁴ to 5.10⁶ g.mol⁻¹ depending on the source from which it has been obtained. This polysaccharide is soluble in water in the whole pH range, in the form of a salt.

Hyaluronic acid is a unique biopolymer intended for therapeutic applications acknowledged as a versatile surface material improving the biocompatibility of remedies. A review can be found for example in the publication (S. Dumitriu, Polysaccharides: Structural diversity and functional versatility, Marcel Dekker Inc. 1998, ISBN 0824701275).

Polysaccharides do not flux but for preparation of fibres, the wet spinning can be successfully used where the polysaccharide solution in a proper solvent is extruded through various types of nozzles (circular nozzle or slot nozzle or a nozzle of various cross-sections: star-shaped, spherical triangle, and the like) directly into a non-solvent (precipitation bath) where a fibre or a film is formed. The description of the wet spinning can be found for example in T.P. Nevell, S.H. Zeronian: Cellulose Chemistry and its Applications. John Wiley & Sons 1985, p. 455 - 479; or: J.E. McIntyre: The Chemistry of Fibres. Edward Arnold, London 1971, p.15.

The wet spinning can be modified into the so-called dry-wet spinning. It is used for example for the spinning of some kinds of aromatic polyamides or fibres made of regenerated cellulose of the types of Tencell, Lyocell, and the like. The principle of the dry-wet spinning consists in that a polymer solution stream leaving the nozzle passes through an air gap of the length within the range between a few millimetres to a few centimetres, before it enters the precipitation bath (this technique is described for example in the documents WO 2000/063470, DE 10331342, JP 2008208480). The dry-wet spinning technique has not yet been used for spinning of hyaluronate.

The methods of hyaluronic acid spinning into a fibre are known, for example A. Rupprecht (Acta Chem. Scand., B33, No. 10, 1979) spun the potassium salt of the hyaluronic acid in 75 to 80% ethanol comprising 0.1 M KCI, where fibres were coiled into a disc so that they agglutinated by drying into a film comprising "spatially oriented" hyaluronic acid. This way of spinning naturally did not lead to fibres which would be possible to process in the textile industry.

Further, E.D.T. Atkins et al. (Biochem. J. 128, 1255-1263, 1972) prepared model fibres of hyaluronic acid and sodium hyaluronate in such a way that first a film was prepared, which was then cut to thin strips. At these "model fibres" cut from the films (and drawn) they determined the crystal modification (including the diameters of an elementary crystal cell) by means of an X-ray structure analysis. They found out that the non-drawn sodium hyaluronate fibre had an elementary cell of the hexagonal crystal system and macromolecules arranged in an antiparallel way, supposing the presence of hydrogen bonds between amid groups of acetylated glukosamine. Base dimensions: a = 1.17 nm (alternatively 2.02 nm). The macromolecule average cross-section dimension approx. 0.673 nm. Dimension c of the elementary cell (along the fibre axis) was 2.85 nm.

They further found out that conditioning of the sodium hyaluronate based fibres at 60 °C and relative humidity of 75 % lead to formation of a new hexagonal crystal lattice, a = 1.87 maintaining c = 2.85 nm. The change of the lattice system (maintaining the crystal modification) is known also in case of other fibres - polymers - e.g. celulose in a cotton fibre.

The same author determined a monoclinic crystal system with an elementary cell diameter of a = 1.96 nm (however, it is not fully defined) of fibres prepared form hyaluronic acid (acidic form). Due to the fact that hyaluronates being highly hygroscopic and soluble in water, the spatial formations are of low resistance against water which is the main technical problem in manufacturing of fibres (both micro- and nanofibres), yarn, non-woven fabrics, scaffolds, membranes, and the like.

The technical solution of this problem consists in using less soluble derivatives of hyaluronic acid, usually esters (e.g. US Patents 4,851,521; 4,965,353 a 5,676,964), and preparing usually non-woven fabrics (for example US Patent 5,520,916). A part of carboxyl groups of hyaluronic acid or all of the groups are esterified (HA-COOH → HA-COOR).

For example US Patent 5824335 describes the preparation of non-woven fabrics from the esters of hyaluronic acid , especially from benzylester.

Further, for example 98/08876 describes preparation of a yarn from the esters of hyaluronic acid. For example a tetrabutylammonium salt of hyaluronic acid is solved in DMSO (dimethylsufoxide) together with PhCH₂Br and an alkylation reaction is carried out resulting in the formation of an ester being spun from this DMSO solution into the yarn which has more of the so-called elementary fibres.

Using of esters leads to blocking of a carboxyl and thus changing the spatial arrangement of fibres. Hyaluronidase enzyme afinity to hyaluronate and its biological properties are changed as well.

When studying polysaccharides and their modifications, their structure which they assume in either polar or non-polar environments should not be neglected. Hyaluronan is practically insoluble in non-polar solvents. This chemistry is associated with the so-called supramolecular chemistry. The inner structure of polysaccharide should be known because, under influence of mainly inner and outer hydrogen bonds, the polymer assumes a particular secondary and tertiary structure in an environment. The hydrogen bonds are weak but considering the fact that they can be established in a great amount per every unit of for example hyaluronic acid, it is obvious that very complex spatial formations are established where the individual molecules are knotted together and wrapped in themselves. The molecules of the solvent (for example water) also bond onto the polysaccharide by means of hydrogen bonds resulting in bulking and enlarging of the polysaccharide volume after its inserting in water.

Hyaluronate bonds a large amount of water onto itself very strongly. A Donati et al. (Biopolymers 59, 434-445, 2001) describe that in fact, the hydrogen bond between the carboxylate group and the acetamide group is mediated by the water molecule.

There is a very interesting fact that the activity coefficient value of the Na+ cation (of 0.7 to 0.8.) implies that very few carboxyl groups bond sodium ions (carboxyl groups are blocked with the hydrogen bond). As every monomer unit of hyaluronic acid comprises one carboxyl group, then it theoretically should be perfectly soluble in water forming solutions of low viscosity. However, this is not true. Even the solutions with low concentration of hyaluronic acid, or hylauronane respectively, have high viscosity.

The Jacoboni study (Journal of Structural Biology 126, 52-58, 1999) states that a three-dimensional network (molecular weight 2 MDa) is established in water at the concentrations of hyaluronic acid above 1 mg/ml. By drying, a network is formed again but the quality of this network depends on the drying speed. However, they formed this network on a graphite or daze surface (there are two kinds: aluminium-potassium silica, and aluminium-potassium silica with approximately 20 % MgO). Unfortunately, they did not observe any network forming in the case of the low molecular hyaluronic acid (170 - 640 kDa). Low molecular molecules of hyaluronic acid showed high tendency to self-aggregation into spiral formations. Other older works prove, for example with the aid of circular dichroism, that the hyaluronic acid network is based on the helix consisting of two molecules (double helix) (P.W. Staskus: Biochemistry 27(5), 1528-34, 1988). A newer study by Feng Qian et al (Gaofenzi Cailiao Kexue Yu Gongcheng, 20(1), 146-148, 2004) describes the hyaluronic acid solutions as three-dimensional dendrimers with fibres of the length of 45 - 95 nm, and physical description with the aid of fractals.

There are works stating that inside the spatial formations of hyaluronic acid, there are also hydrophobic reactions (J.E. Scott at al.: Biochem J. 274, 699-705, 1991). Presumably, they are made of the "spatial orientation" of acetamide groups (methyls). Moreover, these hydrophobic reactions play the main role in the formation of two-dimensional planar formations, as these hydrophobic interactions (with a water interlayer) are divided with individual little layers at a greater distance (I. Jacoboni at al.: Journal of Structural Biology 126, 52-58, 1999). The thermodynamics has to be mentioned here, in other words the hydrophobic groups of water soluble polymers (meant generally) aim to assume the conformation in water such that the repulse forces (water - polymer) were as low as possible, and the result often depends on the concentration (in other words, the surface of hydrophobic domain should be as small as possible in the contact with water).

Other processes are based on the preparation of hyaluronic acid derivatives comprising functional groups which are able to crosslink. For example the derivatives comprising a thiol group crosslinking by oxidation 2 HA-SH → HA-S-S-HA. For example the publication Liu Yanchun et al., Biocompatibility and stability of disulfide-crosslinked hyaluronan films. Biomaterials (2005), 26(23), 4737-4746 describes the preparation of films from thiol-modified hyaluronic acid, where the crosslinking, or forming of the disulfide bridge is achieved by reacting with 0,3% hydrogen peroxide. The document WO 2008/077172 describes a process, where the hyaluronic acid comprising a thiol group was dissolved in the phosphate buffer, partially crosslinked by an oxide, and used for enhancing the growth of cicatrical tissue.

The crosslinking can be achieved also by means of a crosslinking agent, for example divinyl sulfone (WO 2006/056204), aldehydes (US 4,713,448) or polyvalent epoxy compounds (EP 0161887). The document KR 2008062092 describes the preparation of yarn by the method of wet spinning, where hyaluronic acid or its derivative is dissolved in a mixture of dimethyl sulfoxide and water, and spun into a yarn in a coagulation solution (ethanol and *N*,*N-*dimethylformamide (DMF)). This yarn is then crosslinked, only on its surface, according to authors. Also in this case, the biological properties of hyaluronic acid are changed in this manner, furthermore it is very inconvenient to use the DMF, as an eventual residual impurity thereof strongly influences the cell viability.

The Japanese document JP 2007262595 describes the preparation of a gel by mixing hyaluronic acid, crosslinking agent (glutaraldehyde), and calalyzer (Hcl), which is spun by an extrusion technique.

Another possibility is to create a "hybrid" fibre consisting of an anionic polymer - hylauronic acid, and a polymer with cationic character. For example the publication Jou Chi-Hsiung et al., Journal of Applied Polymer Science (2007), 104(1), 220-225 describes PET fibres grafting by acrylic acid, then grafting by chitosane by means of esterification, and then coating with hyaluronic acid. The document WO 2007006403 describes the preparation of fibres from hyaluronic acid derivatives and gellane. The publication of Yamane Shintaro et al., Biomaterials (2004), Volume Date 2005, 26(6), 611-619 describes the preparation of hybrid chitosane/hyaluronic acid fibres. Further, the paper Funakoshi, Tadanao et al., Journal of Biomedical Materials Research, Part A (2005), 74A(3), 338-346 states that the hyaluronate/chitosane fibres have better mechanical properties. The Korean document KR 2007118730 describes the preparation of nanofibres by electrospinning from chitosane, that are impregnated with hyaluronic acid.

Further, the US Patent 2002026039 describes the preparation of yarn by extrusion of hyaluronic acid esters in combination with other biocompatible polymers, such as PTFE, polyglycolic acid, polylactic acid, and the like.

The Japanese document JP 02014019 describes the preparation of microfibres by spraying through a nozzle, where hyaluronic acid 0.7, hydroxyapatite 0.7 , and water 98.6 % are mixed together, and a fibre of a diameter about 10 µm is made from this mixture.

All these processes have the disadvantage that the structure of hyaluronic acid is changed, therefore the properties thereof are changed as well, including the biological properties. Namely it is the chemical conversion of carboxyl group where, as it has been stated above, the affinity of hyaluronidase enzyme to hyaluronate is changed (S.P. Zhong et al., Biodegradation of hyaluronic acid derivatives by hyaluronidase, Biomaterials 1994, 15 (5), 359-365; Eun Ju Oh et al., Target specific and long-acting delivery of protein, peptide, and nukleotide therapeutics using hyaluronic acid derivatives, Journal of Controlled Release 141 (2010) 2-12). Generally, however modified the hyaluronic acid (HA) is, it can change its affinity to all receptors and enzymes reacting with HA in a tissue. Thus for example these HA modifications can also influence the HA recognizing by cells (namely the interactions of HA and CD44 receptor, RHAMM, and others). In the following publication, the interactions of HA and CD44 are described by means of NMR. From this paper it can be seen that the COOH and N-acetyl groups play a role in recognizing HA by means of CD44. (Suneale Banerji et al., Structures of the Cd44-hyaluronan complex provide insight into a fundamental carbohydrateprotein interaction, NATURE STRUCTURAL & MOLECULAR BIOLOGY 14 (3) (2007) 234-239).

There exists also a study (Xuefen Wang et al., Polymer 46(13), 4853-4867, 2005), where a membrane is prepared from hyaluronic acid composed of nanofibres by the "blowing-assisted electro-spinning" method. The formed membrane is immersed into a bath comprising ethanol/HCl/H₂O at 4 °C for 1 to 2 days, and this membrane is water resistant for the period of approximately one week. Based on the results of IR spectroscopy, authors attribute this resistance to the formation of other inner hydrogen bonds leading to crosslinking. It has been stated before, on the base of various physical measurements, that decreasing of pH of hyaluronic acid solutions leads to the formation of a double helix (for example the work: Hofmann H., Schmut O., Albrecht von Graefe's archive for clinical and experimental ophthalmology (1976), 198(1), 95-100); Atkins E.DT. et al., Biochemical Journal (1971), 125(4), 92).

The Japanese document JP 2010138276 A describes the preparation of an elementary thread from hyaluronic acid without the use of any crosslinking agent, where the process comprises contacting a hyaluronic acid solution with a dehydrating liquid forming a membrane on the interface of these two liquids, where "drawing" of this membrane is subsequently carried out forming an elementary thread. Unfortunately, this document does not refer if the thread is processable by common textile techniques.

Incorporating of multifunctional cations (such as Cu²⁺, Fe³⁺, Cr³⁺, and the like) into hyaluronic acid leads to the so-called crosslinking of hyaluronic acid caused by formation of bonds between carboxyl groups of hyaluronic acid and the multifunctional metal cation. Depending on the crosslinking level (crosslinking 100 % for example in case of Fe³⁺ cation means that one Fe³⁺ cation is bonded to three carboxyl groups where each of them comes from one disaccharide unit of hyaluronic acid and where all the carboxyl groups of hyaluronic acid are bonded to the metal), the viscosity of water solutions of hyaluronic acid modified in this way is increasing up to the formation of gels (J.W.Kuo, Practical Aspects of Hyaluronan Based Medical Products, Boston, Massachusetts, USA, Published in 2006 by CRC Press, Taylor & Francis Group). It is quite obvious that hyaluronic acid acts as a polydentate ligand (apart from the carboxyl groups, it comprises also hydroxyl groups and acetamide groups) so it forms the metal complex compounds with transitional metals as well. A very interesting situation can occur in case of a zinc cation, as zinc is not a transitional metal, so its ability to form the metal complex compounds is less distinctive towards most of the anions than for example in case of copper. In the contrary, it shows the tendency to bond redundant hydroxyl ions. Cobalt is another very interesting metal. It is a transitional metal, where a great majority of cobalt compounds derives from two functional cobalt and a majority of complex compounds derives from three functional cobalt. Hydrated salts (for example CoCl₂.6H₂O, Co(NO₃)₂. .6H₂O, Co(SO₄)₂.7H₂O, Co(CH₃COO)₂.4H₂O) are well soluble in water. But, in exact meaning, the hydrated compounds are not concerned as elementary salts but as aquo salts, i.e. coordination compounds. Ammonium solutions of cobaltous (II) salts also tend to oxidize into cobaltic (III) salts, where the oxidation now proceeds with air oxygen already. Cobaltic cation eventually forms very stable metal complex compounds with polydentate ligands (Remy H., Anorganická chemie II., SNTL Praha 1971).

A fibre made of the pure hyaluronic acid or its pharmaceutically acceptable metal compound (salts, complexes, and the like) (sodium, potassium, lithium, calcium, magnesium, cupric, manganese, zinc, chromic, ferric, ferrous, cobaltic, cobaltous, or mixtures of these cations) having the properties of a textile fibre, i.e. the fibre from which a fabric or knitted fabric can be prepared, has not been known up to date. The document WO 2009/050389 describes the preparation of a yarn by the wet spinning method where this yarn comprises hyaluronic acid in the acidic form, the acetic acid, and water, and is partially soluble in water. The preparation of the fibre consists of the following steps: a) preparation of a water solution of hyaluronic acid or its salt, preferably sodium salt, where the hyaluronic acid concentration is higher than 0,8 %, preferably within the range of 1 to 2 wt. %; b) extruding the solution through a nozzle into the spinning bath; c) forming of the fibre in the bath consisting of acetic acid and water, where the acetic acid concentration is higher than 80 %, preferably 90 %, more preferably 99 %. The obtained yarn has a diameter higher than 100 µm. Authors of this document state that the fibres prepared according to their process can be used for both woven and non-woven textiles. In fact, they are not usable for preparing the fabrics or knitted fabrics due to their low strength (according to the comparative example 10, the break occurs at loading of about 67 MPa), so they are usable only for preparing the non-woven textiles. The textile fibres made by standard methods have the strength within following ranges: celulose fibres: 1.8 to 2.7 cN.dtex⁻¹; synthetic fibres 4 cN.dtex⁻¹; coefficient of variation up to 10 %.

The present invention thus removes this absence of tenacious hyaluronan fibres on the market, intended for the preparation of woven fabrics and knitted fabrics by means of common textile processes: weaving, knitting, bobbin lace work - both manual and mechanical, preparation of non-woven textiles especially by fleece strengthening, e.g. needle punching.

Loop (knot) strength of the fibre should be approximately 80% of the fibre strength without deformation. This is especially important for weaving, knitting, and bobbin lace work. For non-woven textiles, the loop strength of the fibre is not crucial.

### Summary of the Invention

The object of the invention is the method for preparing fibres based on hyaluronic acid and/or its metal compounds, where the subject-matter of said method consists in that the spinning solution comprising hyaluronic acid and/or its metal compound is prepared and then spun in the coagulation (precipitation) bath comprising an alcohol and an acid, then the fibre is washed and after washing it is dried.

The method according to the invention is carried out in the following way: first a spinning aqueous solution of hyaluronic acid and/or metal compound of hyaluronic acid comprising 0.001 to 10 N of a base and 0.01 to 8 wt. % of hyaluronic acid and/or its metal compound is prepared; then the solution is spun by a nozzle into the coagulation bath comprising 1 to 99 wt. % of alcohol, 1 to 99 wt. % of acid and not more than 10 wt. % of water, then the fibre is washed with alcohol and dried.

Preferably, after the spinning in the coagulation bath, at least one step selected from the group comprising maturing the fibre in the coagulation bath and drawing the fibre can be carried out.

The spinning solution according to one embodiment of the invention comprises hyaluronic acid and/or its metal compound and a base selected from the group comprising LiOH, NaOH, KOH, Li₂CO₃, Na₂CO₃, K₂CO₃, LiHCO₃, NaHCO₃ and KHCO₃, the coagulation bath comprises an alcohol selected from the group comprising methanol, ethanol, 1-propanol and 2-propanol, and an acid selected from the group comprising formic acid, acetic acid, propionic acid, or their mixture, the washing is carried out by immersing into an alcohol bath or by washing with an alcohol, where the alcohol is selected from the group comprising methanol, ethanol, 1-propanol and 2-propanol, and the drying is carried out by standing in air or in nitrogen or CO₂ atmosphere for 1 hour to 5 days at the temperature of 20 to 80 °C. The spinning solution can be prepared under ambient atmosphere or further preferably under inert atmosphere, e.g. nitrogen or argon. The method of preparing the spinning solution is preferably as follows: first a solution of a base of the concentration of 0.001 to 10 N is prepared, and into this solution, hyaluronic acid and/or its metal compound is gradually added while mixing, so that the solution of the concentration of 0.01 to 8 wt. % of hyaluronic acid and/or its metal compound is formed, and so that the total amount of transitional metals in the solution is not more than 10 mg per 1 kg of hyaluronate, and the final solution is stirred for 20 minutes to 10 hours at the temperature of 18 to 35 °C until a homogeneous solution is formed.

The maximum total amount of transitional metals (Fe²⁺, Fe³⁺, Co²⁺, Co³⁺, Cu²⁺ and Cr³⁺) in the spinning solution is 10 mg per 1 kg of hyaluronate, as these polyvalent ions, when in a higher concentration, can crosslink hyaluronic acid (hyaluronate) into a gel which cannot be spun.

The initial hyaluronic acid and/or its metal compound (Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺) has the molecular weight within the range of 100 kDa to 3 MDa (determined by the usual method SEC-MALLS, Size-Exclusion Chromatography coupled to Multi-Angle Laser Light Scattering, this method is well described e.g. in the publication Bezáková, Z. et al., Effect of microwave irradiation on the molecular and structural properties of hyaluronan. Carbohydrate Polymers 2008, 73, (4), 640 - 646).

In another embodiment the spinning solution can further comprise a metal salt. Any amount of the metal salt can be added up to the maximum amount soluble in the said solution, whereas the amount of a transitional metal can by maximally 10 mg/1 kg of the total amount of hyaluronic acid and its metal compound to avoid hyaluronate crosslinking resulting in forming a gel which cannot be spun. A suitable salt can be a metal salt which is soluble in water under neutral or alkali conditions, preferably a salt comprising metal cations selected from the group comprising Li⁺, Na⁺, K⁺, C²⁺, Mg²⁺, Cr³⁺, Mn²⁺, Fe²⁺, Fe³⁺, Co²⁺, Co³⁺, Cu²⁺, Zn²⁺ and mixtures thereof. The metal salts are preferably selected from the group comprising hydroxides, carbonates, bicarbonates, acetates, formates, chlorides, sulphates, fluorides, nitrates, and hydrates of these salts. In this embodiment of the invention, the spinning solution is preferably prepared in the following was: first the solution of a base selected form the group comprising LiOH, NaOH, KOH, Li₂CO₃, Na₂CO₃, K₂CO₃, LiHCO₃, NaHCO₃ and KHCO₃, with the concentration of the base of 0.001 to 10 N is prepared, and into this solution, hyaluronic acid and/or its metal compound is gradually added while mixing, so that a solution of the concentration of 0.01 to 8 wt. % of hyaluronic acid and/or its metal compound is formed. Then a metal salt is added into this solution so that the total amount of transitional metals is not more than 10 mg per 1 kg of hyaluronate, forming a solution of a compound comprising hyaluronic acid and metal ions, which is then stirred for 20 minutes to 10 hours at the temperature of 18 to 35 °C until a homogeneous solution suitable for spinning is formed. This solution can be prepared under ambient atmosphere or further preferably under inert atmosphere, e.g. nitrogen or argon. Preferably, a fibre is left to stand in the coagulation bath after being spun. Preferably, the fibre is drawn after spinning or its leaving to stand in the coagulation bath.

The term "compound comprising hyaluronic acid and metal ions", as used herein, comprises any compound comprising hyaluronic acid and metal or non-metal ions including salts and metal complex compounds. The nature of the bond between the metal ion and hyaluronic acid depends on the metal, usually it is an ionic bond, covalent bond (ionic-covalent) or coordinate covalent bond. The said term also includes compounds comprising ions of more than one metal. The metals are preferably selected from the group comprising lithium, sodium, potassium, calcium, magnesium, copper, manganese, zinc, chromium, iron, and cobalt.

In another embodiment the coagulation bath can further comprise one or more metal salts. A suitable salt can be a metal salt soluble in the coagulation bath, preferably a salt comprising metal cations selected from the group comprising Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺ and mixtures thereof. The metal salts are selected preferably from the group comprising hydroxides, carbonates, bicarbonates, acetates, formates, chlorides, sulphates, fluorides, nitrates, and hydrates of these salts, within the concentration of 0.01 to 10 N. In one preferred embodiment the coagulation bath contains a solution of metal(s) (e.g. Ca²⁺) in the mixture of 5 to 95 wt. % of alcohol, 5 to 95 wt. % of acid, and maximally 10 wt. % of water. In another embodiment, the washed fibre or the washed and dried fibre, drawn or preferably non-drawn, based on hyaluronic acid and/or its metal compound, can be immersed into a "metallization bath" comprising a salt of polyvalent metal Mn²⁺, Ca²⁺, Cr³⁺, Fe²⁺, Fe³⁺, C²⁺, Co³⁺, Cu²⁺, Zn²⁺ and mixtures thereof, of the concentration of 5.10⁻⁵ to 1.10⁻² M, 1 to 99 wt. % of alcohol, 1 to 99 wt. % of an acid selected from the group comprising formic acid, acetic acid, propionic acid or a mixture thereof, and maximally 10 wt. % of water; or a salt of polyvalent metal Mn²⁺, Ca²⁺, Cr³⁺, Fe²⁺, Fe³⁺, C²⁺, Co³⁺, Cu²⁺, Zn²⁺ and mixtures thereof, of the concentration of 5.10⁻⁵ to 1.10⁻¹ M, 1 to 99 wt. % of alcohol, and maximally 10 wt. % of water, and eventually a base selected from the group comprising LiOH, NaOH, KOH, Li₂CO₃, Na₂CO₃, K₂CO₃, LiHCO₃, NaHCO₃ and KHCO₃ of the concentration of 5.10⁻⁵ to 1 N. As a salt of a polyvalent metal (Mn²⁺, Ca²⁺, Cr³⁺, Fe²⁺, Fe³⁺, Co²⁺, Co³⁺, Cu²⁺, Zn²⁺), acetates, formates, chlorides, sulphates, fluorides, nitrates, and hydrates of these salts are meant. The process is as follows: the washed fibre or the washed and dried fibre, drawn or preferably non-drawn, based on hyaluronic acid and/or its metal compound is introduced into a metallization bath, which enables incorporating of other metals into the fibre after the fibre is washed and dried. The fibre is left in the metallization bath for 20 minutes to 21 days.

In another embodiment, the spinning solution can comprise 0.001 to 10 N of base, 0.01 to 8 wt. % of hyaluronic acid and/or its metal compound and compounds come from hyaluronic acid fibres already prepared, dissolved in the spinning bath comprising a metal selected from the group comprising Li⁺, Na⁺, K⁺, Ca²⁺, Mg²⁺, Mn²⁺, Fe²⁺, Fe³⁺, Co²⁺, Co³⁺, Cu²⁺, Zn²⁺, where the amount of transitional metals in the spinning bath is not more than 10 mg per 1 kg of hyaluronan totally introduced, as these polyvalent ions can at a higher concentration crosslink the hyaluronic acid to a gel which cannot be spun.

In this embodiment of the invention the spinning solution is preferably prepared in the following way: first the solution of a base selected from the group comprising LiOH, NaOH, KOH, Li₂CO₃, Na₂CO₃, K₂CO₃, LiHCO₃, NaHCO₃ and KHCO₃, of the base concentration of 0.001 to 10 N is prepared, and into this solution, the compound comprising hyaluronic acid and metal ions and/or hyaluronic acid and/or its metal compound is gradually added, i.e. the fibres, already prepared, of hyaluronic acid with metal content, so that a solution of the concentration of 0.01 to 8 wt. % of compound comprising hyaluronic acid and metal ions and/or hyaluronic acid and/or its metal compounds is formed, where the transitional metals content is maximally 10 mg per 1 kg of hyaluronate. The solution is stirred for from 20 minutes to 10 hours at the temperature of 18 to 35 °C until a homogeneous solution suitable for spinning is formed. This solution can be prepared under ambient atmosphere or further preferably under inert atmosphere, e.g. nitrogen or argon. Preferably, the fibre is left in the coagulation bath after being spun. Preferably, the fibre is drawn after spinning or its leaving in the coagulation bath.

Hyaluronic acid (HA), like other polysaccharides, does not flux, but wet and wet-dry spinning can be used successfully, where the solution of hyaluronic acid and/or its metal compound is extruded through various types of a nozzle (circular nozzle or slot nozzle or a nozzle of various cross-sections: star-shaped, spherical triangle, and the like) directly into a non-solvent (coagulation bath) where the fibre is formed. We have found out that when a salt of hyaluronic acid or its acid form dissolves in water in the presence of a base, an alkali solution of hyaluronate is formed, and its apparent viscosity depends on the molecular weight (M_{w}) of the dissolved hyaluronate and this value strongly depends on the time of standing of this solution. Standing of this solution during time gradually causes the decomposition of hyaluronate molecules and thereby a solution with lower viscosity forms, which can be extruded through the nozzle into the coagulation (spinning) bath, where the so-called non-drawn fibre forms. However, the most essential fact concerning the preparation of strong (tenacious) fibres is that, at tangential stress (tangential pressure) that corresponds to the shear velocity of 1000 s⁻¹, the values of apparent viscosity of the solutions which have been standing for different times are almost the same (of about 0.54 Pa.s at the temperature of 20 °C). It means, that at suitable mechanical arrangement, also hyaluronan with high molecular weight can be spun.

As the coagulation bath is acidic, the alkali salt of hyaluronic acid is converted into an acidic form (HA-COOMe → HA-COOH), and during standing of the fibre in this bath, a set of hydrogen bonds is gradually formed, which converts the "free" carboxyl group into a carboxyl group involved in this H-bonds system, and thus the water resistance, i.e. insolubility, of the formed fibre gradually increases, and the strength of this fibre increases.

The presence of the alcohol in the coagulation bath is essential, as at its proper concentration, the fibre does not float on the bath surface but sinks to the bottom and does not paste together. We have found that the presence of the alcohol in the coagulation bath also fundamentally influences the shape of the hyaluronic acid molecule and thus the fibre strength. In the coagulation bath which comprises acetic acid, water and alcohol, the molecules of hyaluronic acid show a distinctively lower diffusion than in the bath consisting only of acetic acid and water. The lower diffusion (the lower diffusion coefficient) is presumably caused by an increase of hydrodynamic molecule diameter. While in acetic acid and water, the molecule "wraps" itself into a globule, in the contrary, the presence of alcohol causes that the molecule keeps a shape of a linear helix, from which a continuous fibre can be formed more easily, and the fibre has a substantially higher strength.

The prepared solution of hyaluronan is spun preferably by a nozzle of a diameter of 0.05-1.6 mm as a monofilament or by a nozzle with more outlets into the coagulation bath. When using the spinning by a nozzle with more outlets, a cable of silk is obtained, which comprises 2 to 50 primary fibres.

An especially well-proved method is the so-called "gravitation" spinning where the spinning nozzle is placed vertically, and the fibre being formed is formed and drawn by gravitation without any stress in the spinning bath, along the line of 1 to 5 m. The fibre being formed can freely lay on the bottom of the spinning shaft or it can be coiled on an appropriate coil. The lag time of the fibre being formed in the coagulation bath is 1 s to 48 hours.

Wet-dry spinning is also possible, where the air passage before the solution being spun enters the coagulation (spinning) bath is 1 - 200 mm.

Organic or inorganic acid or mixtures thereof can be used as an acid. The organic acid is preferably selected from the group comprising formic acid, acetic acid, propionic acid, and their mixtures. The inorganic acid is preferably the phosphoric acid. Alcohol is preferably selected from the group comprising methanol, ethanol, propane-1-ol and propane-2-ol, and mixtures thereof. The temperature of the coagulation bath is 18 to 30 °C.

If necessary, the fibre can be drawn with the drawing ratio of 1.1 to 7 during the coagulation in the coagulation bath or after the coagulation. The drawing rate is the ratio of the length of the drawn and of the non-drawn fibre. Preferably, the fibre is drawn when it is slightly dried - partly dried. Fibre drawing is a process when the fibre is deformed (drawn) along the longitudinal axis of the fibre. The fibre length increases, its diameter decreases, and its fineness increases. Due to the orientation of the macromolecules and sub-molecular formations, and due to increasing of the crystalic portion the mechanical parameters of the fibre improve - its strength increases and its ductility decreases. Also, during the drawing process, the less stable crystal modification can convert into a stable modification.

During fibre drying, water is removed from the fibre and only water incorporated directly into its molecular structure remains. The drawn or non-drawn fibre is directly introduced into an alcohol - either it is washed with an alcohol or it is introduced into an alcohol bath, where the alcohol is preferably methanol, ethanol, propane-1-ol, or propane-2-ol, which removes water from the fibre, consequently only water bound in the inner structure of hyaluronic acid remains. The alcohol bath comprises 5 to 100 g of alcohol per 1 g of a fibre, and the temperature of the bath can be from 20 °C to the boiling point of the alcohol used. Then the fibre coiling and drying follows. The fibre drying can be carried out by simple standing in the air or inert atmosphere of nitrogen or CO₂ for 1 hour to 5 days at the temperature of 20 to 80 °C.

A certain amount of solvents used in the coagulation and drying bath (i.e. acid and alcohol) remains in the final fibre. This content of residual solvents can be defined within the range of 0.2 to 5 wt. % by means of NMR spectroscopy.

Further, we have found out by means of our own research that the fibre based on hyaluronic acid represents anionic polyelectrolyte into which polyvalent cations (Mn²⁺, Ca²⁺, Cr³⁺, Fe²⁺, Fe³⁺, Co²⁺, Co³⁺, Cu²⁺, Zn²⁺) can be incorporated, and which, under influence of these polyvalent cations, can be converted into the fibre which is slower soluble or even insoluble in water (crosslinking - saturation of all "free" carboxyl groups).

Moreover, the object of the invention is a fibre consisting of hyaluronic acid and/or at least one compound comprising hyaluronic acid and metal ion, where the fibre can eventually comprise metal compounds coming from the manufacturing process, preparable by the method according to the present invention, which has the properties of a textile fibre, which means that textiles can be manufactured from this fibre by weaving, knitting or bobbin lace work. The fibre is composed of hyaluronic acid and/or at least one compound comprising hyaluronic acid and metal ions, where the molecular weight of macromolecules is within the range of 100 kDa to 3 MDa (determined by the SEC-MALLS method). Preferably, the diameter of the fibre (monofilament, primary fibre) is 4 µm to 1 mm, length weight 0.1 to 30 g/1000 m (0.1 to 30 tex), tensile strength 0.65 to 3 cN.dtex⁻¹ and loop strength 20 to 80 % of tensile strength. The object of the invention is also a cable of silk that comprises 2 to 50 primary fibres.

The maximum amount of the metal cations in the fibre is presented in the following table.

**Table 1.**

| Metal ion | Maximum amount in the fibre (wt. %) |
|---|---|
| Li⁺ | 1.80 |
| Na⁺ | 5.72 |
| K⁺ | 9.36 |
| | |
| Mg²⁺ | 3.11 |
| Ca²⁺ | 5.03 |
| | |
| Mn²⁺ | 6.77 |
| Zn²⁺ | 7.95 |
| Fe²⁺ | 6.87 |
| Cu²⁺ | 7.75 |
| Co²⁺ | 7.22 |
| | |
| Cr³⁺ | 4.38 |
| Fe³⁺ | 4.69 |
| Co³⁺ | 4.93 |

The fibre can eventually comprise a metal compound coming from the manufacturing process, such as acetates, formates, sulphates, chlorides, fluorides, nitrates, phosphates, hydroxides, or oxides of metals selected from the group comprising lithium, sodium, potassium, calcium, magnesium, copper, manganese, zinc, chromium, iron, and cobalt. These compounds can weakly or strongly interact with hyaluronic acid. In case of zinc, the fibre can also comprise zincates as metal salts.

Another object of the invention is the use of the fibre according to the invention for the preparation of woven and non-woven textiles.

### Brief description of the drawings

Fig. 1 illustrates a drawn hyaluronic acid fibre prepared according to the example 4.
Fig. 2 illustrates a knitted fabric prepared from a hyaluronic acid fibre (example 4).
Fig. 3 illustrates a fabric prepared from a hyaluronic acid fibre (example 4).
Fig. 4 illustrates a fibre manufactured according to the example 6 - SEM photo.

### Preferred embodiments of the invention

The photos of the fibres were made on Tescan VEGA II LSU microscope (Tescan, Brno). This microscope uses a wolfram cathode, and maximum resolution is 3 mm. The parameters of the measurement were as follows: accelerating voltage of primary electron beam: 5 kV, working distance (WD): 4 - 5 mm, pressure in the chamber: high vacuum, imaging regime: secondary electrons.

The fibres were stuck onto a carbon sticking target and then sputtered with gold. The gold layer on the sample: approx. 15 nm, sputtering machine: SC7620 Mini Sputter Coater (Quorum Technologies, UK).

IR spectra were measured on the FTIR-8400S apparatus from SHIMADZU company. The samples were measured in the form of KBr capsules.

The tensile strength of the fibres was measured on the dynamometer Instron 5500R (Instron company).

The loop strength of the fibres was measured on the dynamometer Instron 5500R (Instron company).

The molecular weight of hyaluronic acid, or hyaluronans, was measured by means of HPLC from Shimadzu company, which is supplemented with the light scattering detector miniDAWN from Watt Technologies (the so-called SEC-MALLS method).

The apparent viscosity was measured on the rheometer ARG2 from TA Instruments. The measurement system of a cone (40 mm/1°)-plate was used. The cone parameters: the first-diameter, the second-taper angle.

The diffusion NMR spectra or liquid NMR samples were analysed by means of the apparatus Bruker AvanceTM III 500 MHz operating at the proton frequency of 500.25 MHz and equipped with 5 mm Bruker BBFO broadband probe. Spectra analysis and processing were made in the programme Topspin 2.1 (Bruker Biospin). All the spectra were obtained without rotation at the temperature of 25 °C. Diffusion NMR spectra (Diffusion ordered spectroscopy - DOSY) were measured by means of pulse frequency with stimulated echo and bipolar gradients. 32 scans were cumulated using a formed sinus pulse of the length of 2.5 ms (i.e. 5 ms for the bipolar pulse couple) within the range of 0.674 to 32.030 Gcm-1 in 24 increments with the diffusion time 1000 to 1600 ms and 16K time domain of data points. The processing was performed by multiplying the data by the line-extension factor of 1 Hz, suppressing of apparent peaks by the factor of 4, and setting the maximum interaction number to 100, noise sensitivity factor to 2, and number of components to 1.

### Example 1

Under inert atmosphere (helium, nitrogen), at intensive stirring, 6 grams of sodium hyaluronate (CPN s.r.o., Dolni 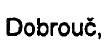 Czech Republic) having the molecular weight of 1.7 MDa (determined by SEC-MALLS method) was dissolved in 94 g of water, with the addition of 0.64 g of NaOH, until a homogeneous, well flowing viscous solution was obtained. This solution was spun through an industrial nozzle used for example for spinning the celulose xanthogenate solution. The nozzle has 24 outlets of the diameter of 0.2 mm. The wet spinning was carried out. As the precipitation (coagulation, spinning) bath, the mixture of 700 ml of ethanol p.a. and 300 ml of pure 98% formic acid was used. A non-drawn fibre was obtained, which, after 40 minutes of standing in the coagulation bath, was drawn by 50 % and washed with methanol. A cable of silk was obtained, having 24 elementary fibres of the diameter of 22.5 µm.

### Example 2

Under air atmosphere, at intensive stirring, 6 grams of sodium hyaluronate (CPN s.r.o., Dolni 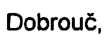 Czech Republic) having the molecular weight of 1.7 MDa (determined by SEC-MALLS method) was dissolved in 94 g of water with the addition of 0.51 g of NaOH, until a homogeneous, well flowing viscous solution suitable for spinning was obtained. This solution was spun by the wet spinning method with a nozzle of a diameter of 0.4 mm into the coagulation bath consisting of: 650 ml of methanol p.s. and 350 ml of pure 98% formic acid. The flow rate of the spinning solution through the nozzle was 6 cm³.min⁻¹. A non-drawn fibre was obtained and, after 40 minutes of standing in the coagulation bath, a part thereof was drawn by 50 % and then washed with methanol, in a similar way as the non-drawn fibre. A monofilament (an individual elementary fibre) was obtained and its strength, in case of drawing, was 1.635 mN.dtex⁻¹ and ductility 8 % after conditioning at the relative humidity of 65 %, compared to the non-drawn fibre with the strength of 0.588 mN.dtex⁻¹ and ductility of 24 % after conditioning at the same conditions.

### Example 3

Under air atmosphere, at intensive stirring, 6 grams of sodium hyaluronate (CPN s.r.o., Dolní 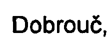 Czech Republic) having the molecular weight of 1.7 MDa (determined by SEC-MALLS method) was dissolved in 94 g of water with the addition of 0.51 g of NaOH, until a homogeneous, well flowing viscous solution suitable for spinning was obtained. This solution was spun by the wet spinning method with a nozzle of the diameter of 0.4 mm into a coagulation bath consisting of: 700 ml of methanol p.s. and 300 ml of pure 98% formic acid. A non-drawn fibre was obtained. A part of this fibre was drawn by 70 % after 15 minutes of standing, the second part of the fibre was drawn by 70 % after standing in the coagulation bath for 40 min. The sample which was left in the bath for 40 min. shows the strength of 1.647 cN.dtex⁻¹ (at the relative humidity of 65 %) and ductility of 8 %, compared to the sample having stayed for 15 min. only, where the strength of 0.945 cN.dtex⁻¹ and ductility of 7 % were found.

### Example 4

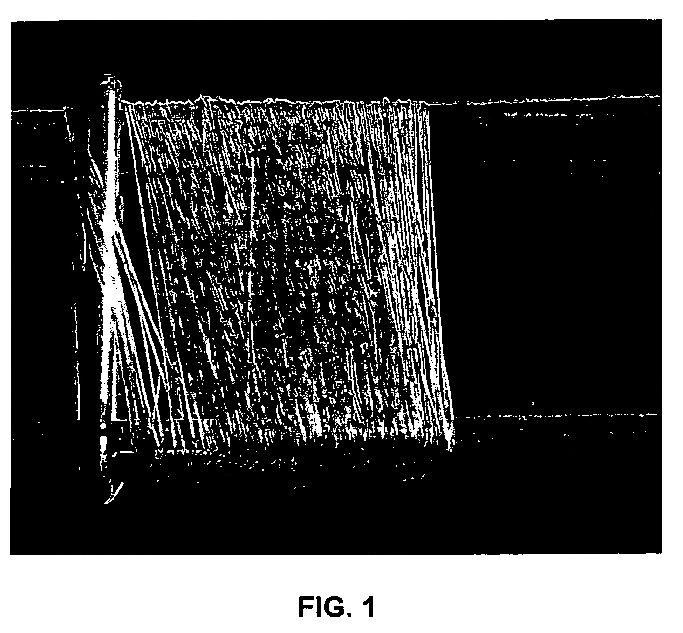

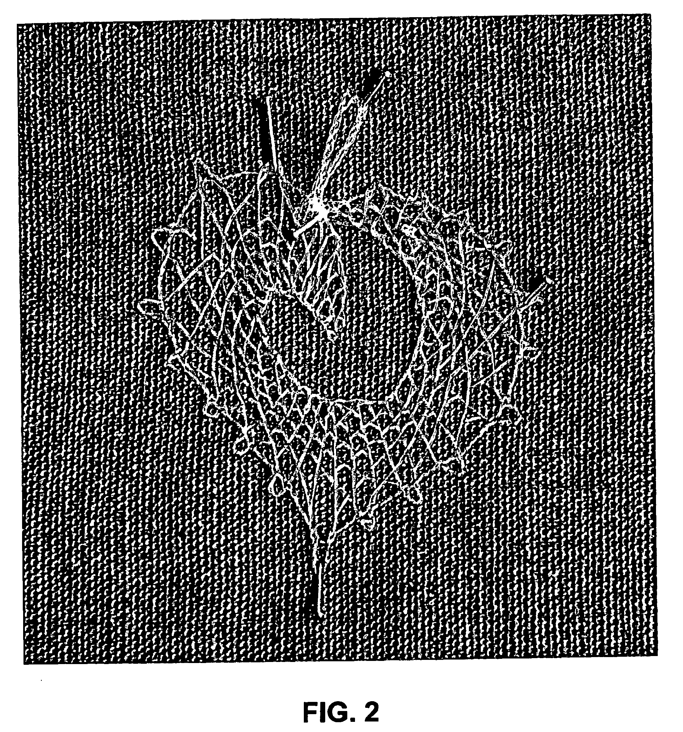

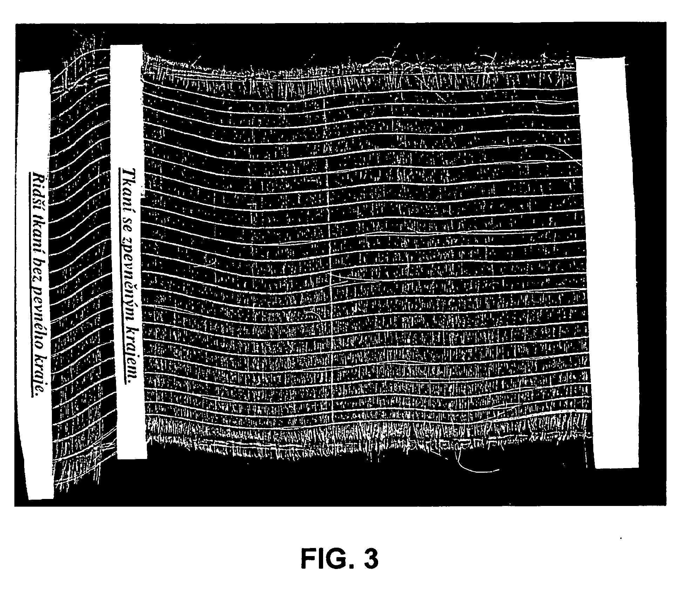

Under air atmosphere, at intensive stirring, 6 grams of sodium hyaluronate (CPN s.r.o., Dolní 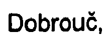 Czech Republic) having the molecular weight of 1.7 MDa (determined by SEC-MALLS method) was dissolved in 94 g of water with the addition 0.64 g of NaOH, until a homogeneous, well flowing viscous solution suitable for spinning was obtained. This solution was spun by the wet spinning method with a nozzle of the diameter of 0.4 mm into a coagulation bath consisting of: 700 ml of methanol p.s. and 300 ml of pure 98% formic acid. The ray trajectory of the solution being spun passing through the air before the entrance into the coagulation bath was 1 cm. The non-drawn fibre was left in the coagulation bath for 15 hours, then the fibre was drawn by 80 %, washed with ethanol and dried. A fibre monofilament with the strength of 2.829 cN.dtex⁻¹ and ductility of 9 % after conditioning at air relative humidity of 65 % was obtained. From the fibre obtained in this way (Fig. 1), knitted fabric (Fig. 2) and fabric (Fig. 3) were made.

### Example 5

Under air atmosphere, at intensive stirring, 6 grams of sodium hyaluronate (CPN s.r.o., Dolní 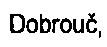 Czech Republic) having the molecular weight of 1.7 MDa (determined by SEC-MALLS method) was dissolved in 94 g of water with the addition of 0.51 g of NaOH, until a homogeneous, well flowing viscous solution suitable for spinning was obtained. This solution was spun by the wet spinning method with a nozzle of the diameter of 0.4 mm into a coagulation bath consisting of: 600 ml of methanol p.a. and 300 ml of pure 98% formic acid and 100 g of calcium chloride anhydrous. The flow rate of the spinning solution through the nozzle was 6 cm³.min⁻¹. A non-drawn fibre was obtained which, after 30 minutes of standing in the coagulation bath, was drawn by 60 % and then washed with methanol. A fibre monofilament was obtained, with the strength of 0.73 cN.dtex⁻¹ and ductility of 3.4 % after conditioning at relative humidity of 65 %.

### Example 6

2 ml of water solution of NaOH (prepared by introducing 6.4 g of NaOH pellets into 100 ml of water) and 18 ml of H₂O (demi pure) were mixed in a 50 ml beaker. 1.6 g of sodium hyaluronate (CPN s.r.o., Dolní 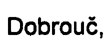 Czech Republic) having the molecular weight of 2.6 MDa (determined by SEC-MALLS method) was slowly added at very intensive stirring (1400 rpm) on the magnetic mixer Heidolph. The agitator revolutions were gradually decreased with the increasing viscosity of the solution to keep the stirring of the solution. This solution in which the concentration of hyaluronate is 7.4 % has been stirred for 18 hours to ensure the complete homogeneity. Then it was poured into a 20ml syringe which was left open for a short time (few minutes) to remove bubbles and then the syringe was closed with a piston.

The coagulation bath was prepared by mixing propane-2-ol and 98% acetic acid in the ratio of 1:4 by volume, and pouring this mixture into a high graduated cylinder of the volume of 500 ml. The syringe was placed into a linear pump Nexus 5000 from the Chemyx company. A 45cm hose with Luer-lock system was joined to the syringe, and the needle Hamilton N NEEDLE (26/51/3) with the mouth diameter of 0.26 mm was joined to the end of the hose. The needle was immersed into the bath, approximately 5 cm under the surface. Then the spinning process was started. The fibre was dropping to the bottom of the graduated cylinder on the trajectory of about 35 cm (helical movement), where it stocked gradually. During this process, a the fibre can aglutinate together, but after removing it from the coagulation bath, the fibre can be untwisted very easily. After finishing the spinning process, the end of the fibre was caught and the fibre was removed from the bath to a perforated reel, where it dried gradually and volatile precipitants evaporated.

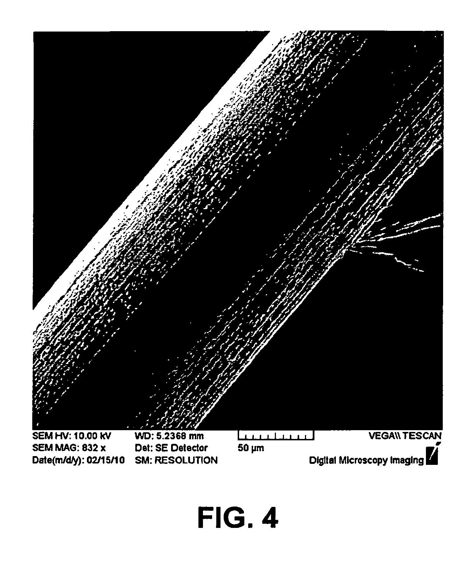

The resulting fibre (Fig. 4) consists of hyaluronic acid having the molecular weight of 170.5 kDa and polydispersity of 1.751 (determined by SEC-MALLS method). The fibre strength was measured on the break test machine Instron 3343.

**Table 2. Results of the strength measurement on the break test machine Instron 3343**

| Measurement number | Load at break (N) | Relative tensile deformation at break (%) | Tensile stress at break (MPa) | Young modulus (MPa) |
|---|---|---|---|---|
| 1 | 1.549 | 49.949 | 136.918 | 4818.308 |
| 2 | 1.657 | 45.044 | 146.511 | 4789.980 |
| 3 | 1.623 | 43.578 | 143.541 | 4789.634 |
| 4 | 1.664 | 31.743 | 147.131 | 4525.190 |
| 5 | 1.661 | 36.183 | 146.873 | 4387.297 |
| 6 | 1.626 | 52.971 | 143.807 | 4928.441 |
| 7 | 1.691 | 47.089 | 149.539 | 4926.704 |
| 8 | 1.695 | 38.702 | 149.899 | 4601.137 |
| 9 | 1.584 | 49.432 | 140.030 | 5107.897 |
| 10 | 1.599 | 67.298 | 141.383 | 4985.042 |
| 11 | 1.539 | 54.573 | 136.109 | 4920.572 |
| 12 | 1.581 | 62.878 | 139.778 | 4933.848 |
| 13 | 1.742 | 48.667 | 154.026 | 5128.864 |
| 14 | 1.652 | 40.321 | 146.068 | 4932.798 |
| 15 | 1.722 | 43.583 | 152.226 | 5161.790 |
| Mean value | 1.639 | 47.467 | 144.923 | 4862.500 |
| Median | 1.652 | 47.089 | 146.068 | 4926.704 |
| Variation coefficient | 3.700 | 19.999 | 3.700 | 4.526 |
| Standard deviation | 0.061 | 9.493 | 5.363 | 220.075 |

### Example 7

Under air atmosphere, at intensive stirring, 6 grams of sodium hyaluronate (CPN s.r.o., Dolni 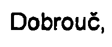 Czech Republic) having the molecular weight of 1.7 MDa (determined by SEC-MALLS method) was dissolved in 94 g of water with the addition of 0.64 g of NaOH, until a homogeneous, well flowing viscous solution suitable for spinning was obtained. This solution was spun by the wet spinning method through a nozzle with the diameter of 0.4 mm into a coagulation bath of the total volume of 250 ml. After 30 minutes, the obtained fibre was removed from the coagulation bath, drawn by about 30 %, washed with methanol, and dried.

**Table 3 Mechanical properties of fibres**

| Fibre length 50 mm, measurement repeated 7 times, the values cited are mean values. | | | | | | | | |
|---|---|---|---|---|---|---|---|---|
| Example | Composition of the coagulation bath | Fibre diameter /mm/ | Fineness (tex) | Load (N) | Tensile deformation (mm/mm) | Young modulus (gf/tex) | Strength [MPa] | Relative strength (cN/dtex) |
| 7.1 | 30 % (vol.) MeOH + 70 % (vol.) CH₃COOH | 0.1544 | 27.82 | 2.26 | 0.07 | 276.45 | 121 | 0.813 |
| 7.2 | 30 % (vol.) 2--propanol + 70 % (vol.) CH₃COOH | 0.0897 | 12.50 | 1.70 | 0.11 | 286.59 | 269 | 1.36 |
| 7.3 | 30 % (vol.) EtOH + 70 % (vol.) CH₃COOH | 0.1870 | 20.46 | 2.53 | 0.16 | 252.89 | 92.1 | 1.237 |
| 7.4*^{x} | 90 % (vol.) CH₃COOH + 10 % (vol.) H₂O | 0.1878 | 28.77 | 1.85 | 0.07 | 180.09 | 66.82 | 0.64 |
| 7.5* | 90 % (vol.) CH₃COOH + 10 % (vol.) EtOH | 0.1923 | 32.05 | 2.81 | 0.09 | 240.63 | 96.8 | 0.8781 |

| | | | | | | | | |
|---|---|---|---|---|---|---|---|---|
| * Wet spinning process ^{x} Method according to WO 2009/050389 | | | | | | | | |

Experiments with various kinds of alcohols in the coagulation bath were carried out. The alcohols methanol, glycol, 1,2-propandiol, 2-propanol and ethanol were used, and from these, methanol, ethanol and 2-propanol appeared to be most preferred, mainly for technical reasons (easy removal form the bath, fibre untwisting, and the like). The table implies that the fibre strength is enhanced thanks to the addition of alcohol into the coagulation bath.

### Example 8 (comparative example)

In the 50 ml beaker, 2 ml of an aqueous solution of NaOH (prepared by adding 6.4 g of NaOH pellets into 100 ml of water) and 18 ml of H₂O (demi pure) were mixed. 1.6 g of sodium hyaluronate (CPN s.r.o., Dolní 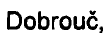 Czech Republic) having the molecular weight of 2.6 MDa (determined by SEC-MALLS method) was slowly added at very intensive stirring (1400 rpm) on the magnetic mixer Heidolph. The agitator revolutions were gradually decreased with the increasing viscosity of the solution to keep the stirring of the solution. This solution, where the concentration of hyaluronate is 7.4 %, has been stirred for 18 hours to ensure the complete homogeneity. Then it was poured into a 20ml syringe which was left open for a short time (few minutes) to remove bubbles and then the syringe was closed with a piston.

The coagulation bath was prepared according to the description in Table 4 in a high graduated cylinder of the volume of 500 ml. The syringe was placed into a linear pump Nexus 5000 from the Chemyx company. A 45cm hose with Luer-lock system was joined to the syringe, and the needle Hamilton N NEEDLE (26/51/3) with the mouth diameter of 0.26 mm was joined to the end of the hose. The needle was immersed into the bath, approximately 5 cm under the surface. The parameters of the syringe and the feeding speed were set in the pump. Then the spinning process was started. The results of the influence of individual acids are summarized in Table 4.

**Table 4**

| **Example** | **Composition of the coagulation bath** | **Properties** |
|---|---|---|
| 8.1 | Citric acid, saturated solution (1.3 kg/l) | The formed fibre maintains its shape in the bath, keeps at the surface, twists. It does not maintain its shape in the air. |
| 8.2 | Citric acid, saturated The solution + H₂O (3:1) | The formed fibre maintains its shape in the bath, keeps at the surface, twists. During the time it become slushy and dissolves. |
| 8.3 | Citric acid, saturated solution + H₂O (1:1) | From the beginning, the fibre forms very badly, keeps at the surface. It become slushy very quickly, melts after some time. |
| 8.4 | HNO₃ conc. (68%) | The fibre ascends, twists, conglomerates, and gradually melts. |
| 8.5 | HNO₃ conc. + H₂O (3:1) | The fibre ascends, twists, conglomerates, and gradually melts. |
| 8.6 | HNO₃ conc. + H₂O (1:1) | The fibre ascends, twists, conglomerates, and melts quite quickly. |
| 8.7 | HCl conc. (36%) | The fibre forms, however, after leaving the nozzle it maintains its shape for about 2 cm only, and then melts. |
| 8.8 | HCl conc. + H₂O (3:1) | The fibre does not form. |
| 8.9 | HCl conc. + H₂O (1:1) | The fibre does not form. |
| 8.10 | H₃PO₄ conc. (85%) | The fibre forms and ascends, maintains its shape, it can be removed from the bath. The fibre shows a low strength; mechanical properties were not measured. |
| 8.11 | H₃PO₄ conc. + H₂O (3:1) | The fibre forms and ascends, maintains its shape, can be removed from the bath. The mechanical properties are worse than in case of undiluted acid. |
| 8.12 | H₃PO₄ conc. + H₂O (1:1) | The fibre forms and ascends, maintains its shape, can be removed from the bath. The mechanical properties are worse than in case of undiluted acid. |

All the ratios of compositions are volume ratios. H₃PO₄ was 85%, HCl 36%, and HNO₃ 68%. Citric acid was prepared as a saturated solution (1.3 kg/l H₂O).

The above mentioned table implies that of all the acids tested, only H₃PO₄ is suitable, as it enables the formation and maintaining of the fibre, which can be subsequently used for manufacturing a non-woven fabric. Further, it is obvious, that the presence of water in the coagulation bath deteriorates the fibre formation process.

### Example 9

Under air atmosphere, at intensive stirring, 6 grams of sodium hyaluronate (CPN s.r.o., Dolni 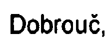 Czech Republic) having the molecular weight of 1.7 MDa (determined by SEC-MALLS method) were dissolved in 94 g of water with the addition of 0.51 g of NaOH, until a homogeneous, well flowing viscous solution suitable for spinning was obtained. One hour after the beginning of stirring, this prepared solution was spun by the wet spinning method in an apparatus enabling the spinning of high viscous solutions with the nozzle of the diameter of 0.4 mm into a coagulation bath consisting of: 700 ml of methanol p.a. and 300 ml of pure 98% formic acid. After 30 minutes of standing in the coagulation bath, the fibre was drawn by 80 %, the drawn fibre was washed with methanol and dried at 20 °C. The strength of this fibre was 1.94 cN/dtex and ductility 8 % (at relative humidity of 65 %).

### Example 10

Under air atmosphere, at intensive stirring, 6 grams of sodium hyaluronate with molecular weight of 1.7 MDa (determined by SEC-MALLS method) were dissolved in 94 g of water with the addition of 0.51 g of NaOH. After stirring for 30 minutes, 0.1978 g of CaCl₂. 2H₂O in 10 ml of distilled water was added, and the stirring continued until a homogeneous, well flowing viscous solution suitable for spinning was obtained. This solution was spun by the wet spinning method with the nozzle of the diameter of 0.4 mm into a coagulation bath consisting of: 650 ml of methanol p.a. and 350 ml of pure 98% formic acid. The flow rate of the spinning solution through the nozzle was 6 cm³.min⁻¹. A non-drawn fibre was obtained which, after 40 minutes of standing in the coagulation bath, was drawn by 60 %, washed with methanol, and dried at room temperature. The obtained fibre has fineness of 18.45 tex, diameter of 99.88 µm, strength of 1.182 1,182 cN/dtex (0.2784 Gpa).
Ca²⁺ content = 1013 [mg.kg⁻¹].

### Example 11

The method described in Example 4 was used for the preparation of a fibre (drawn, dried) which had the initial strength of 2.829 cN/dtex (0.3539 GPa) - elongation at break of 9 %. This fibre was immersed in a metalization bath having the composition: 2 g of chrome alum (KCr(SO₄)₂. 12 H₂O), 650 ml of methanol p.a., 350 ml of pure 98% formic acid and 10 ml of water. The fibre was left in this bath at room temperature for 24 hours. After this time, the fibre winding was removed from the bath, washed with methanol and dried at room temperature. The strength of the resulting fibre is 1.097 cN/dtex (0,1954 GPa), elongation at break is 3 %.
Cr³⁺ content = 990.9 [mg.kg⁻¹].

### Example 12

The method described in Example 4 was used for the preparation of a fibre (drawn, dried) which had the initial strength of 1.715 cN/dtex (0.2290 GPa) - elongation at break of 6 %. This fibre was immersed in a bath having the composition: 2 g of cupric sulphate (CuSO₄.5H₂O), 650 ml of methanol p.a., 350 ml of pure 98% formic acid and 10 ml of water. The fibre was left in this bath at room temperature for 24 hours. After this time, the fibre winding was removed from the bath, washed with methanol and dried at room temperature. The strength of the resulting fibre is 1.197 cN/dtex (0.1826 GPa), elongation at break is 4 %.
Cu²⁺ content = 3780 [mg.kg⁻¹].

### Example 13

Sodium hyaluronan (6 g) having the molecular weight of 1.79 MDa (determined by SEC-MALLS) was dissolved in water (94 g), with the addition of NaOH (0.64 g) with intensive stirring under air atmosphere. After 30 minutes of stirring, 0.387 g ZnSO₄ . 7H₂O was added (mol. weight 287.558) in 10 ml of distilled water and the stirring continued until a homogenous, well flowing viscous solution, suitable for spinning was obtained. This solution was spun by the wet method through a nozzle of the diameter of 0,4 mm into the coagulation bath having the following composition: 650 ml of methanol p.a. and 350 ml of pure 98% formic acid. The flow rate of the spinning solution through the nozzle was 6 cm³.min⁻¹. A non-drawn fibre was obtained, which was left to stand in the coagulation bath for 30 minutes and then was drawn by 60 %, washed with methanol and dried at room temperature. The obtained fibre had the fineness of 18.87 tex, diameter of 123.49 µm, strength of 1.298 cN/dtex (0.2046 GPa). Zn²⁺ content: 1104 [mg.kg⁻¹].

### Example 14

Sodium hyaluronan (6 g) having the molecular weight of 1.79 MDa [ sample labeled 290110 - 2] (determined by SEC-MALLS) was dissolved in water (94 g), with the addition of NaOH (0.64 g) with intensive stirring under air atmosphere. All ingredients were stirred until the formation of a homogenous, well flowing viscous solution, suitable for spinning. This solution was spun by the wet method through a nozzle of the diameter of 0,4 mm with an air gap of 1 cm into the coagulation bath having the following composition: 650 ml of methanol p.a. and 350 ml of pure 98% formic acid. The flow rate of the spinning solution through the nozzle was 6 cm³.min⁻¹. A non-drawn fibre was obtained, which was left to stand in the coagulation bath for 40 minutes and then was drawn by 60 % and washed with methanol. The fibre, still wet, was "metalized" in a solution having the following composition: 4 g of chromium trichlorid (hexahydrate) and 2 g of anhydrous sodium carbonate in 250 ml of propan-2-ol. The standing time was 21 days. After removing from the metalization bath, the fibre was washed with methanol and dried at room temperature The obtained fibre is insoluble in water at room temperature.
Cr³⁺ ions content: 2217 [mg.kg⁻¹].
Mechanical parameters of the fibre: strength 1.097 cN/dtex (0.1954 GPa), elongation at break 3 %.

### Example 15

Sodium hyaluronan (6 g) having the molecular weight of 1.79 MDa - [ sample labeled 290110-2] - (determined by SEC-MALLS) was dissolved in water (94 g), with the addition of NaOH (0.64 g) with intensive stirring under air atmosphere. All ingredients were stirred until the formation of a homogenous, well flowing viscous solution, suitable for spinning. This solution was spun by dry-wet method through a nozzle having the diameter of 0.4 mm with an air gap of 1 cm into the coagulation bath having the following composition : 650 ml of methanol p.a. and 350 ml of pure 98% formic acid. The flow rate of the spinning solution through the nozzle was 6 cm³.min⁻¹. A non-drawn fibre was obtained, which was left to stand in the coagulation bath for 40 minutes and then was drawn by 60 % and washed with methanol and dried at room temperature. The dried fibre was "metalized" in the metalization bath having the following composition: 4 g of chromium trichlorid (hexahydrate) and 2 g of anhydrous sodium carbonate in 250 ml of 2-propanol. The standing time therein was 21 days. After removing from the metalization bath, the fibre was washed with methanol and dried at room temperature.
The obtained fibre was insoluble in water at room temperature.
Content of Cr³⁺ ions: 1445 [mg.kg⁻¹].
Mechanical parameters of the fibre: strength 1.93 cN/dtex (0.377 GPa), elongation at break 6 %.

### Example 16

Sodium hyaluronan (5.94 g) having the molecular weight of 1.79 MDa - [ sample labeled 290110 - 2] - (determined by SEC-MALLS) was dissolved in water (94 g), with the addition of NaOH (0.64 g) with intensive stirring under air atmosphere. To this solution, 0.06 g of fibres prepared in Example 11 (Cr⁺ content = 990.9 [mg.kg⁻¹]) was added. This solution was stirred until the formation of a homogenous, well flowing viscous solution, suitable for spinning. This solution was spun by dry-wet method through a nozzle having the diameter of 0.4 mm with an air gap of 1 cm into the coagulation bath having the following composition : 650 ml of methanol p.a. and 350 ml of pure 98% formic acid. The flow rate of the spinning solution through the nozzle was 6 cm³.min⁻¹. A non-drawn fibre was obtained, which was left to stand in the coagulation bath for 40 minutes and then was drawn by 60 % and washed with methanol and dried at room temperature. A fibre having Cr⁺ content = 9,8 [mg.kg⁻¹] was obtained.

### Example 17

Sodium hyaluronan (6 g) having the molecular weight of 1.79 MDa - [ sample labeled 290110-2] - (determined by SEC-MALLS) was dissolved in water (94 g), with the addition of NaOH (0.64 g) with intensive stirring under air atmosphere. All ingredients were stirred and dissolved until a homogenous, well flowing viscous solution, suitable for spinning was achieved. This solution was spun by the wet method through a nozzle having the diameter of 0.4 mm with an air gap of 1 cm into the coagulation bath having the following composition: 650 ml of methanol p.a. and 350 ml of pure 98% formic acid. The flow rate of the spinning solution through the nozzle was 6 cm³.min⁻¹. A non-drawn fibre was obtained, which was left to stand in the coagulation bath for 40 minutes and then was drawn by 60 % and washed with methanol. The still wet fibre was "metalized" in the solution having the following composition: 16 g of cupric sulphate (pentahydrate) in the mixture of 650 ml of methanol p.a. and 350 ml of 98% pure formic acid. The standing time therein was 21 days. After removing from the metalization bath, the fibre was washed with methanol and dried at room temperature.
The obtained fibre was soluble in water at room temperature.
Content of Cu²⁺ ions: 52418 [mg.kg⁻¹].
Mechanical parameters of the fibre: strength 1.197 cN/dtex (0.1826 GPa), elongation at break 4%.

### Example 18 (comparative example)

Sodium hyaluronan (6 g, CPN s.r.o. Dolní 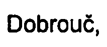 Czech Republic), having the molecular weight of 1.7 MDa (determined by SEC-MALLS) was dissolved in water (94 g), with the addition of NaOH (0.51 g) with intensive stirring under air atmosphere, until a homogenous, well flowing viscous solution, suitable for spinning was achieved. This solution was spun by the wet method through a nozzle having the diameter of 0.4 mm into the coagulation bath (1 litre) having the following composition: water and 200 g of calcium chloride hexahydrate. A fibre of bad drawability was obtained, which tenders in time, having the strength at break 0.49 cN/dtex and elongation at break of 2.6 %.

### Example 19 (comparative example - method according to WO 2009/050389)

Sodium hyaluronan (6 g, CPN s.r.o. Dolní 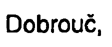 Czech Republic), having the molecular weight of 1.7 MDa (determined by SEC-MALLS) was dissolved in water (94 g), with the addition of NaOH (0.51 g) with intensive stirring under air atmosphere, until a homogenous, well flowing viscous solution, suitable for spinning was achieved. This solution was spun by the wet method through a nozzle having the diameter of 0.4 mm into the coagulation bath having the following composition: 900 ml of concentrated acetic acid and 100 ml of distilled water. The flow rate of the spinning solution through the nozzle was 6 cm³.min⁻¹.A non-drawn fibre was obtained, which was left to stand in the coagulation bath for 30 minutes and then was drawn by 50 % and then dried at 20 °C. A monofilament having the strength of 0.64 cN/dtex (66,82 MPa) was obtained. The Table below shows the comparison with the fibres prepared according to the Examples 3 and 4, subjected to the same drawing.

| Method | Strength of the fibre (cN/dtex) | Load at break (MPa) |
|---|---|---|
| Fibre prepared according to WO 2009/050389 (Example 19 - comparative) | 0.64 | 66.82 |
| Fibre prepared according to Example 3 of this patent application | 1.647 | 248.5 |
| Fibre prepared according to Example 4 of this patent application | 2.829 | 353.6 |

## Claims

1. A method of preparation of fibres based on hyaluronic acid and/or a metal compound thereof **characterized by that** a spinning aqueous solution containing hyaluronic acid and/or a metal compound thereof is prepared which is subsequently spun in a coagulation bath containing 1 to 99 % wt. of an alcohol, 1 to 99 % wt. of an acid and not more than 10 % wt. of water, wherein the temperature of the coagulation bath is 18 to 30 °C, and then the fibre is washed and after washing, the fibre is dried.

2. The method according to claim 1, **characterized by that** after spinning in the coagulation bath, at least one of the steps selected from the group comprising maturation of the fibre in the coagulation bath for 1 second to 48 hours and drawing of the fibre at the drawing ratio within the range of 1.1 to 7 is performed.

3. The method according to any of the preceding claims, **characterized by that** the spinning solution of the hyaluronic acid and/or a metal compound thereof is prepared, containing 0.001 to 10 N of a base and 0.01 to 8 % wt. of the hyaluronic acid and/or a metal compound thereof, then the solution is spun through the nozzle into the coagulation bath containing 1 to 99 % wt. of alcohol, 1 to 99 % wt. of an acid and not more than 10 % wt. of water, subsequently the fibre is washed with alcohol and dried.

4. The method according to any of the preceding claims, **characterized by that** the spinning solution contains the hyaluronic acid and/or a metal compound thereof and a base selected from the group comprising LiOH, NaOH, KOH, Li₂CO₃, Na₂CO₃, K₂CO₃, LiHCO₃, NaHCO₃ and KHCO₃, the coagulation bath contains an alcohol selected from the group comprising methanol, ethanol, 1-propanol and 2-propanol, and an acid selected from the group comprising formic acid, acetic acid, propionic acid or a mixture thereof, the washing is performed by means of an alcohol selected from the group comprising methanol, ethanol, 1-propanol and 2-propanol, and the drying is performed by standing in air or in a nitrogen or CO₂ atmosphere for 1 hour to 5 days at the temperature of 20 to 80 °C.

5. The method according to any of the preceding claims, **characterized by that** the hyaluronic acid and/or a metal compound thereof has the molecular weight within the range of 100 kDa to 3 MDa and the metal compound of the hyaluronic acid is selected from the group comprising Li⁺, Na⁺, K⁺, Ca²⁺, Mg²⁺ salt.

6. The method according to any of the preceding claims, **characterized by that** the spinning solution is prepared under an inert atmosphere.

7. The method according to any of the preceding claims, **characterized by that** the coagulation bath contains 40 to 70 %wt. of methanol or ethanol, 30 to 60 %wt of formic or acetic acid and not more than 5 %wt. of water.

8. The method according to any of the preceding claims, **characterized by that** the spinning solution is prepared by first preparing a solution of the base having the concentration from 0,001 to 10 N, then into this solution the hyaluronic acid and/or a metal compound thereof is gradually introduced while stirring in order to obtain a solution having the concentration of 0,01 to 8 % wt. of the hyaluronic acid and/or a metal compound thereof, the resulting solution Is then stirred for 20 minutes to 10 hours at the temperature of 18 to 35 °C until a homogenous solution is formed.

9. The method according to any of the preceding claims, **characterized by that** the spinning solution of the hyaluronic acid and/or a metal compound thereof contains 0,001 to 10 N of the base, 0.01 to 8 % wt. of the hyaluronic acid and/or a metal compound thereof and a metal salt, preferably the metal salt is selected from the group comprising hydroxides, carbonates, bicarbonates, acetates, formates, chlorides, sulphates, fluorides, nitrates and hydrates of metals selected from the group comprising Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺, wherein the amount of the metal salt is given by the solubility of the metal in the spinning solution and wherein the amount of the transition metal in the spinning solution is not more than 10 mg / 1 kg of the total amount of the hyaluronic acid and the metal compound thereof;

10. The method according to the claim 9, **characterized by that** first a solution of a base having the concentration of 0,001 to 10 N is prepared, into this solution the hyaluronic acid and/or a metal compound thereof is gradually introduced while stirring in order to obtain a solution having the concentration of 0,01 to 8 % wt. of the hyaluronic acid and/or a metal compound thereof, then a metal salt is added to this solution so that the maximum amount of the transition metal is 10 mg/1 kg of the total amount of the hyaluronic acid and/or a metal compound thereof, then the resulting solution is stirred for 20 minutes to 10 hours at the temperature of 18 to 35 °C until a homogenous solution is formed.

11. The method according to any of the claims 1 to 7, **characterized by that** the coagulation bath contains an alcohol and an acid and one or more metal salts, preferably the metal salt Is selected from the group comprising hydroxides, carbonates, bicarbonates, acetates, formates, chlorides, sulphates, fluorides, nitrates and hydrates of these salts, of metals selected from the group comprising Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺ in the concentration of 0,01 to 10 N, preferably the coagulation bath contains a solution of a calcium salt in the mixture of 5 to 95 % wt. of alcohol, 5 to 95 % wt. of an acid and not more than 10 % wt. of water.

12. The method according to any of the claims 1 to 7, **characterized by that** the washed or the washed and dried fibre is inserted into the metalization bath containing a metal salt and an alcohol for 20 minutes to 21 days, then it is washed and dried, preferably the metal salt is selected from the group comprising acetates, formates, chlorides, sulphates, fluorides, nitrates and hydrates of these salts, of metals selected from the group comprising Mn²⁺, Ca²⁺, Cr³⁺, Fe²⁺, Fe³⁺, Co²⁺, Co³⁺, Cu²⁺, Zn²⁺ and mixtures thereof and the alcohol is selected from the group comprising methanol, ethanol, 1-propanol and 2-propanol.

13. The method according to the claim 12, **characterized by that** the metalization bath contains a metal salt having the concentration of 5.10⁻⁵ to 1.10⁻² M, 1 to 99 % of alcohol, 1 to 99 % wt. of an acid selected from the group comprising formic acid, acetic acid, propionic acid or a mixture thereof, and not more than 10 % wt. of water.

14. The method according to the claim 12, **characterized by that** the metalization bath contains a metal salt having the concentration of 5.10⁻⁵ to 1.10⁻¹ M, 1 to 99 % of alcohol and not more than 10 % wt. of water, preferably the metalization bath further contains a base selected from the group comprising LiOH, NaOH, KOH, Li₂CO₃, Na₂CO₃, K₂CO₃, LiHCO₃, NaHCO₃ and KHCO₃ in the concentration of 5.10⁻⁵ to 1 N.

15. The method according to any of the claims 1 to 7, **characterized by that** the spinning aqueous solution contains 0,001 to 10 N of a base, 0,01 to 8 % wt. of the hyaluronic acid and/or a metal compound thereof and hyaluronic acid fibres containing a metal selected from the group comprising Li⁺, Na⁺, K⁺, Ca²⁺, Mg²⁺, Mn²⁺, Fe²⁺, Fe³⁺, Co²⁺, Co³⁺, Cu²⁺, Zn²⁺, wherein the maximum total content of Fe²⁺, Fe³⁺, Co²⁺, Co³⁺, Cu²⁺ and Cr³⁺ in the fibres of the hyaluronic acid is 1.10⁻³ % wt, preferably the hyaluronic acid fibres in the spinning solution are the fibres prepared by the method according to any of claims 8 to 14.

16. The method according to the claim 15, **characterized by that** first a solution of a base having the concentration of 0,001 to 10 N is prepared, into this solution the hyaluronic acid fibres containing a metal and the hyaluronic acid and/or a metal compound thereof are gradually introduced while stirring in order to obtain a solution having the total concentration of the hyaluronic acid fibres and the hyaluronic acid and/or the metal compound thereof within the range of 0,01 to 8 % wt., then the resulting solution is stirred for 20 minutes to 10 hours at the temperature of 18 to 35 °C until a homogenous solution is formed.

17. A fibre based on the hyaluronic acid and/or a metal compound thereof **characterized by that** it contains the hyaluronic acid and/or a metal compound thereof having the molecular weight within the range 100 kDa to 3 MDa and that the diameter of the fibre, monofilament, primary fibre, is 4 µm to 1 mm, the linear density is 0,1 to 30 g/1000 m (0.1 to 30 tex), the tensile strength is 0,65 to 3 cN.dtex⁻¹ and the loop strength is 20 to 80 % of the tensile strength, preferably the fiber further contains a metal selected from the group comprising Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺.

18. A silk tow, which contains 2 to 50 primary fibres having the diameter of 4 µm to 1 mm, the linear density of 0,1 to 30 g/1000 m (0,1 to 30 tex), the tensile strength of 0,65 to 3 cN.dtex⁻¹ and the loop strength of 20 to 80 % of the tensile strength.

19. A use of the fibre having the diameter of 4 µm to 1 mm, the linear density of 0,1 to 30 g/1000 m (0,1 to 30 tex), the tensile strength of 0,65 to 3 cN.dtex⁻¹ and the loop strength of 20 to 80 % of the tensile strength, and/or a silk tow containing fibres having the diameter of 4 µm to 1 mm, the linear density of 0,1 to 30 g/1000 m (0,1 to 30 tex), the tensile strength of 0,65 to 3 cN.dtex⁻¹ and the loop strength of 20 to 80 % of the tensile strength, for the production of woven and non-woven fabrics.

## Patentansprüche

1. Verfahren zur Vorbereitung von Fasern auf der Basis von Hyaluronsäure und/oder einer Metallverbindung derselben, **dadurch gekennzeichnet, dass** eine wässrige, die Hyaluronsäure und/oder eine Metallverbindung derselben enthaltende Verspinnungslösung vorbereitet wird, die anschliessend in einem Koagulierbad versponnen wird, wobei das Bad 1 bis 99 Gew.-% Alkohol, 1 bis 99 Gew.-% Säure und nicht mehr als 10 Gew.-% Wasser enthält und die Temperatur des Koagulierbads im Bereich von 18 bis 30°C liegt, und die Faser dann ausgewaschen und danach getrocknet wird.

2. Verfahren nach Anspruch 1, **dadurch gekennzeichnet, dass** nach der im Koagulierbad erfolgten Verspinnung zumindest ein der Schritte durchgeführt wird, die aus der die Reifung der Faser in dem Koagulierbad im Zeitraum von 1 Sekunde bis 48 Stunden sowie den Abzug der Faser mit dem Abzugsverhältnis im Bereich von 1,1 bis 7 umfassenden Gruppe ausgewählt werden.

3. Verfahren nach einem der vorangehenden Ansprüche, **dadurch gekennzeichnet, dass** die Verspinnungslösung der Hyaluronsäure und/oder einer Metallverbindung derselben vorbereitet wird, wobei diese eine Base in der Menge von 0,001 bis 10 N und die Hyaluronsäure und/oder eine Metallverbindung derselben in der Menge von 0,01 bis 8 Gew.-% enthält, worauf die Lösung durch eine Düse in das Koagulierbad versponnen wird, das 1 bis 99 Gew.-% Alkohol, 1 bis 99 Gew.-% Säure und nicht mehr als 10 Gew.-% Wasser enthält, und anschliessend die derart hergestellte Faser mit Alkohol ausgewaschen und dann getrocknet wird.

4. Verfahren nach einem der vorangehenden Ansprüche, **dadurch gekennzeichnet, dass** die Verspinnungslösung die Hyaluronsäure und/oder eine Metallverbindung derselben sowie eine Base enthält, wobei die Base aus der LiOH, NaOH, KOH, Li₂CO₃, Na₂CO₃, K₂CO₃, LiHCO₃, NaHCO₃ und KHCO₃ enthaltenden Gruppe ausgewählt wird, das Koagulierbad einen Alkohol, der aus der Methanol, Ethanol, 1-Propanol und 2-Propanol enthaltenden Gruppe ausgewählt wird, und eine Säure, die aus der Ameisensäure, Essigsäure, Propionsäure oder einem Gemisch der vorgenannten Säuren enthaltenden Gruppe ausgewählt wird, enthält, das Auswaschen mittels eines Alkohols durchgeführt wird, der aus der Methanol, Ethanol, 1-Propanol und 2-Propanol enthaltenden Gruppe ausgewählt wird, und die Trocknung indem durchgeführt wird, dass die Faser während eines Zeitraums von 1 Stunde bis 5 Tage in der Luft oder in einer Stickstoff- bzw. CO2-Atmosphäre bei einer Temperatur im Bereich von 20 bis 80°C verweilt.

5. Verfahren nach einem der vorangehenden Ansprüche, **dadurch gekennzeichnet, dass** die Hyaluronsäure und/oder eine Metallverbindung derselben das Molekulargewicht im Bereich von 100 kDa bis 3 MDa aufweisen und dass die Metallverbindung der Hyaluronsäure aus der Gruppe ausgewählt wird, die die Li⁺-, Na⁺-, K⁺-, Ca²⁺- und Mg²⁺-Salz umfasst.

6. Verfahren nach einem der vorangehenden Ansprüche, **dadurch gekennzeichnet, dass** die Verspinnungslösung unter einer inerten Atmosphäre vorbereitet wird.

7. Verfahren nach einem der vorangehenden Ansprüche, **dadurch gekennzeichnet, dass** das Koagulierbad Methanol oder Ethanol mit einem Gewichtsanteil von 40 bis 70%, Ameisen- oder Essigsäure mit einem Gewichtsanteil von 30 bis 60% sowie Wasser mit einem Gewichtsanteil nicht mehr als 5% enthält.

8. Verfahren nach einem der vorangehenden Ansprüche, **dadurch gekennzeichnet, dass** die Verspinnungslösung vorbereitet wird, indem zuerst eine Basenlösung mit der Konzentration im Bereich von 0,001 bis 10 N vorbereitet wird, in die anschliessend schrittweise und unter Rühren die Hyaluronsäure und/oder eine Metallverbindung derselben zugegeben wird, um eine Lösung zu erhalten, in der die Konzentration der Hyaluronsäure und/oder einer Metallverbindung derselben im Bereich von 0,01 bis 8 Gew.-% liegt, und dann die derart vorbereitete fertige Lösung während eines Zeitraums von 20 Minuten bis 10 Stunden bei einer Temperatur im Bereich von 18 bis 35°C umrührt wird, bis eine homogene Lösung entsteht.

9. Verfahren nach einem der vorangehenden Ansprüche, **dadurch gekennzeichnet, dass** die wässrige Verspinnungslösung der Hyaluronsäure und/oder einer Metallverbindung derselben eine Base mit der Konzentration von 0,001 bis 10 N, 0,01 bis 8 Gew.-% der Hyaluronsäure und/oder einer Metallverbindung derselben, sowie ein Metallsalz enthält, vorzugsweise ein Metallsalz, das aus der Hydroxiden, Carbonaten, Bicarbonaten, Acetaten, Formiaten, Chloriden, Sulfaten, Fluoriden, Nitraten von Metallen sowie von Hydraten dieser Salze enthaltenden Gruppe ausgewählt wird, wobei die jeweiligen Metalle aus der Li⁺, Na⁺, K⁺, Ca²⁺, Mg²⁺, Cr³⁺, Mn²⁺, Fe²⁺, Fe³⁺, Co²⁺, Co³⁺, Cu²⁺ und Zn²⁺ enthaltenden Gruppe ausgewählt werden, wobei die Menge des Metallsalzes durch die Löslichkeit des Metalls in der Verspinnungslösung bestimmt ist und wobei die Menge des Übergangsmetalls in der Verspinnungslösung nicht mehr als 10 mg / 1 kg der Gesamtmenge der Hyaluronsäure und einer Metallverbindung derselben beträgt.

10. Verfahren nach Anspruch 9, **dadurch gekennzeichnet, dass** zuerst eine Basenlösung mit der Konzentration im Bereich von 0,001 bis 10 N vorbereitet wird, in die anschliessend schrittweise und unter ständigem Rühren die Hyaluronsäure und/oder eine Metallverbindung derselben zugegeben wird, um eine Lösung zu erhalten, in der die Konzentration der Hyaluronsäure und/oder einer Metallverbindung derselben im Bereich von 0,01 bis 8 Gew.% liegt, worauf dieser Lösung ein Metallsalz zugegeben wird, so dass die Höchstmenge des Übergangsmetalls in der Verspinnungslösung nicht mehr als 10 mg / 1 kg der Gesamtmenge der Hyaluronsäure und/oder einer Metallverbindung derselben beträgt, und dann die derart vorbereitete fertige Lösung während eines Zeitraums von 20 Minuten bis 10 Stunden bei einer Temperatur im Bereich von 18 bis 35°C umrührt wird, bis eine homogene Lösung entsteht.

11. Verfahren nach einem der Ansprüche 1 bis 7, **dadurch gekennzeichnet, dass** das Koagulierbad einen Alkohol, eine Säure und zumindest ein Metallsalz enthält, vorzugsweise ein Metallsalz, das aus der Hydroxiden, Carbonaten, Bicarbonaten, Acetaten, Formiaten, Chloriden, Sulfaten, Fluoriden, Nitraten von Metallen sowie von Hydraten dieser Salze enthaltenden Gruppe ausgewählt wird, wobei die jeweiligen Metalle aus der Li⁺, Na⁺, K⁺, Ca²⁺, Mg²⁺, Cr³⁺, Mn²⁺, Fe²⁺, Fe³⁺, Co²⁺, Co³⁺, Cu²⁺ und Zn²⁺ enthaltenden Gruppe ausgewählt werden und die Konzentration des Metallsalzes zwischen 0,01 und 10 N liegt, wobei das bevorzugte Koagulierbad ein Kalziumsalz enthält, das in einem Gemisch aufgelöst ist, das 5 bis 95 Gew.-% Alkohol, 5 bis 95 Gew.-% Säure und nicht mehr als 10 Gew.-% Wasser enthält.

12. Verfahren nach einem der Ansprüche 1 bis 7, **dadurch gekennzeichnet, dass** die ausgewaschene oder ausgewaschene und anschliessend getrocknete Faser in das ein Metallsalz und einen Alkohol enthaltende Metallisierbad während eines Zeitraum von 20 Minuten bis 21 Tagen hineingelegt wird und anschliessend sie wieder ausgewaschen und getrocknet wird, wobei das Metallsalz vorzugsweise aus der Acetaten, Formiaten, Chloriden, Sulfaten, Fluoriden, Nitraten sowie von Hydraten dieser Salze von Metallen enthaltenden Gruppe ausgewählt wird und die jeweiligen Metalle aus der Mn²⁺, Fe²⁺, Fe³⁺, Co²⁺, Co³⁺, Cu²⁺ und Zn²⁺ und deren Gemische enthaltenden Gruppe ausgewählt werden, und der Alkohol aus der Methanol, Ethanol, 1-Propanol und 2-Propanol enthaltenden Gruppe ausgewählt wird.

13. Verfahren nach Anspruch 12, **dadurch gekennzeichnet, dass** das Metallisierbad ein Metallsalz mit der Konzentration von 5.10⁻⁵ bis 1.10⁻² M, einen Alkohol mit dem Gewichtsanteil im Bereich von 1 bis 99%, eine Säure mit dem Gewichtsanteil im Bereich von 1 bis 99%, wobei die Säure aus der Ameisensäure, Essigsäure, Propionsäure oder einem Gemisch der vorgenannten Säuren enthaltenden Gruppe ausgewählt wird, und Wasser mit dem Gewichtsanteil von höchstens 10% enthält.

14. Verfahren nach Anspruch 12, **dadurch gekennzeichnet, dass** das Metallisierbad ein Metallsalz mit der Konzentration von 5.10⁻⁵ bis 1.10⁻² M, einen 1 bis 99 Gew.-% Alkohol und nicht mehr als 10 Gew.-% Wasser enthält, wobei das Metallisierbad vorzugsweise eine Base enthält, die aus der LiOH, NaOH, KOH, Li₂CO₃, Na₂CO₃, K₂CO₃, LiHCO₃, NaHCO₃ und KHCO₃ enthaltenden Gruppe ausgewählt wird und deren Konzentration im Bereich von 5.10⁻⁵ bis 1 N liegt.

15. Verfahren nach einem der Ansprüche 1 bis 7, **dadurch gekennzeichnet, dass** die wässrige Verspinnungslösung eine Base mit der Konzentration von 0,001 bis 10 N, die 0,01 bis 8 Gew.-% von Hyaluronsäure und/oder einer Metallverbindung derselben, sowie die von der Hyaluronsäurefasern enthält, wobei die Fasern ein Metall enthalten, das aus der Li⁺, Na⁺, K⁺, Ca²⁺, Mg²⁺, Cr³⁺, Mn²⁺, Fe²⁺, Fe³⁺, Co²⁺, Co³⁺, Cu²⁺ und Zn²⁺ enthaltenden Gruppe ausgewählt wird, wobei der höchste an Gesamtgehalt an Fe²⁺, Fe³⁺, Co²⁺, Co³⁺, Cu²⁺ und Cr³⁺ in den von der Hyaluronsäure gebildeten Fasern 1.10⁻³ Gew.-% beträgt, wobei die in der Verspinnungslösung enthaltenen von der Hyaluronsäure gebildeten Fasern vorzugsweise jene Fasern sind, die durch das Verfahren nach einem der Ansprüche 8 bis 14 vorbereitet worden sind.

16. Verfahren nach Anspruch 15, **dadurch gekennzeichnet, dass** zuerst eine Basenlösung mit der Konzentration im Bereich von 0,001 bis 10 N vorbereitet wird, in die anschliessend schrittweise und unter Rühren die Hyaluronsäurefasern, die ein Metall sowie die Hyaluronsäure und/oder eine Metallverbindung derselben enthalten, zugegeben werden, um eine Lösung zu erhalten, in der die Gesamtkonzentration der Hyaluronsäurefasern sowie der Hyaluronsäure und/oder einer Metallverbindung derselben im Bereich von 0,01 bis 8 Gew.-% liegt, und dann die derart vorbereitete fertige Lösung während eines Zeitraums von 20 Minuten bis 10 Stunden bei einer Temperatur im Bereich von 18 bis 35°C umrührt wird, bis eine homogene Lösung entsteht.

17. Faser auf der Basis der Hyaluronsäure und/oder einer Metallverbindung derselben, **dadurch gekennzeichnet, dass** sie die Hyaluronsäure und/oder eine Metallverbindung derselben mit dem Molekulargewicht im Bereich von 100 kDa bis 3 MDa enthält und dass der Durchmesser der Faser, des Monofilaments, der Primärfaser, 4 µm bis 1 mm beträgt, die lineare Dichte im Bereich von 0,1 bis 30 g / 1000 m (0,1 bis 30 tex) liegt, die Zugfestigkeit im Bereich von 0,65 bis 3 cN.dtex⁻¹ liegt und die Schlingenfestigkeit 20 bis 80% der Zugfestigkeit beträgt, wobei die Faser vorzugsweise weiter ein Metall enthält, das aus der Li⁺, Na⁺, K⁺, Ca²⁺, Mg²⁺, Cr³⁺, Mn²⁺, Fe²⁺, Fe³⁺, Co²⁺, Co³⁺, Cu²⁺ und Zn²⁺ enthaltenden Gruppe ausgewählt wird.

18. Seidensträngchen, das 2 bis 5 Primärfasern enthält, die den Durchmesser im Bereich von 4 µm bis 1 mm, die lineare Dichte im Bereich von 0,1 bis 30 g / 1000 m (0,1 bis 30 tex), die Zugfestigkeit im Bereich von 0,65 bis 3 cN.dtex⁻¹ und die Schlingenfestigkeit, die 20 bis 80% der Zugfestigkeit beträgt, aufweisen.

19. Verwendung des Fasers, die den Durchmesser im Bereich von 4 µm bis 1 mm, die lineare Dichte im Bereich von 0,1 bis 30 g / 1000 m (0,1 bis 30 tex), die Zugfestigkeit im Bereich von 0,65 bis 3 cN.dtex⁻¹ und die Schlingenfestigkeit 20 bis 80% der Zugfestigkeit aufweist, und/oder des Seidensträngchens, der die Fasern enthält, die den Durchmesser im Bereich von 4 µm bis 1 mm, die lineare Dichte im Bereich von 0,1 bis 30 g / 1000 m (0,1 bis 30 tex), die Zugfestigkeit im Bereich von 0,65 bis 3 cN.dtex⁻¹ und die Schlingenfestigkeit, die 20 bis 80% der Zugfestigkeit beträgt, aufweisen, zur Herstellung von gewebten sowie ungewebten Textilien.

## Revendications

1. Un procédé de préparation de fibres sur la base d'acide hyaluronique et / ou d'un composé de métal de celui-ci, **caractérisé par ce que** l'on prépare une solution aqueuse de filage contenant de l'acide hyaluronique et / ou du composé de métal de celui-ci et celle-ci est ensuite filée dans un bain de coagulation contenant de 1 à 99% en poids d'alcool, de 1 à 99% en poids d'acide et au maximum 10% en poids d'eau, où la température du bain de coagulation est de 18 à 30 °C, et ensuite la fibre est lavée et après le lavage, la fibre est séchée.

2. Procédé selon la revendication 1, **caractérisé en ce que,** après le filage dans un bain de coagulation, au moins l'une des étapes choisies dans le groupe comprenant la maturation de la fibre dans le bain de coagulation pendant la durée de 1 s jusqu'à 48 heures et l'étirage de la fibre avec un rapport d'étirage dans la gamme de 1,1 à 7 est effectué.

3. Procédé selon l'une quelconque des revendications précédentes, **caractérisé en ce que** l'on prépare la solution de filage de l'acide hyaluronique et / ou du composé de métal de celui-ci, et celle-ci comprend 0,001 à 10 N de base et 0,01 à 8%en poids d'acide hyaluronique et / ou de composé de métal de celui-ci, ensuite la solution est filée par la buse dans le bain de coagulation contenant de 1 à 99% en poids d'alcool, de 1 à 99% en poids d'acide et au maximum 10% en poids d'eau, et ensuite, la fibre est lavée avec de l'alcool et séchée.

4. Procédé selon l'une quelconque des revendications précédentes, **caractérisé en ce que** la solution de filage contient de l'acide hyaluronique et / ou du composé de métal de celui-ci et une base choisie dans le groupe comprenant LiOH, NaOH, KOH, Li₂CO₃, Na₂CO₃, K₂CO₃, LIHCO₃, NaHCO₃ et KHCO₃, et le bain de coagulation contient un alcool choisi dans le groupe comprenant le méthanol, l'éthanol, le 1-propanol et 2-propanol et un acide choisi dans le groupe contenant l'acide formique, l'acide acétique, l'acide propionique ou un mélange de ceux-ci, le lavage est effectué par le moyen d'un alcool choisi dans le groupe comprenant le méthanol, l'éthanol, le 1-propanol et le 2-propanol éthanol, et le séchage est effectué en l'exposant à l'air ou à une atmosphère d'azote ou de CO₂ pendant la durée de 1 heure jusqu'à 5 jours à la température de 20 à 80°C.

5. Procédé selon l'une quelconque des revendications précédentes, **caractérisé en ce que** l'acide hyaluronique et / ou un composé de métal de celui-ci a le poids moléculaire dans la gamme de 100 kDa à 3 MDa et le composé de métal de l'acide hyaluronique est choisi dans le groupe contenant les sels Li⁺, Na⁺, K⁺, Ca²⁺, Mg²⁺.

6. Procédé selon l'une quelconque des revendications précédentes, **caractérisé en ce que** la solution de filage est préparée sous une atmosphère inerte.

7. Procédé selon l'une quelconque des revendications précédentes, **caractérisé en ce que** le bain de coagulation contient de 40 à 70% en poids de méthanol ou d'éthanol, de 30 à 60% d'acide formique ou d'acide acétique et au maximum 5% en poids d'eau.

8. Procédé selon l'une quelconque des revendications précédentes, **caractérisé en ce que** la solution de filage est préparée en préparant d'abord une solution de la base ayant une concentration de 0,001 à 10 N, puis dans cette solution l'acide hyaluronique et / ou un composé de métal de celui-ci est introduit progressivement en la remuant pour obtenir une solution ayant la concentration de 0,01% à 8% en poids de l'acide hyaluronique et / ou d'un composé de métal de celui-ci, la solution obtenue est ensuite agitée pendant la durée de 20 minutes à 10 heures à la température de 18 à 35°C jusqu'à ce qu'une solution homogène soit formée.

9. Procédé selon l'une quelconque des revendications précédentes, **caractérisé en ce que** la solution de filage de l'acide hyaluronique et / ou d'un composé de métal de celui-ci contient de 0,001 à 10 N de base, de 0,01 à 8% en poids d'acide hyaluronique et / ou de composé de métal de celui-ci et le sel métallique, de préférence le sel d'un métal choisi dans le groupe comprenant hydroxydes, carbonates, bicarbonates, acétates, formiates, chlorures, sulfates, fluorures, nitrates et hydrates de métaux choisi dans le groupe comprenant Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺, où la quantité du sel métallique est donnée par la solubilité du métal dans la solution de filage et où la quantité de métal de transition dans la solution de filage est au maximum 10 mg / 1 kg de la quantité totale de l'acide hyaluronique et du composé de métal de celui-ci.

10. Procédé selon la revendication 9, **caractérisé en ce que** d'abord une solution de la base ayant une concentration de 0,001 à 10 N est préparée, puis dans cette solution l'acide hyaluronique et / ou le composé de métal de celui-ci est introduit progressivement tout en remuant pour obtenir une solution ayant la concentration de 0,01 à 8% en poids d'acide hyaluronique et / ou de composé de métal de celui-ci, puis un sel métallique est ajouté à cette solution de sorte que la quantité maximale du métal de transition soit de 10 mg / 1 kg de la quantité totale de l'acide hyaluronique et / ou d'un composé de métal de celui-ci, puis on remue la solution résultante pendant la durée de 20 minutes jusqu'à 10 heures à la température de 18 à 35°C jusqu'à ce qu'une solution homogène soit formée.

11. Procédé selon l'une quelconque des revendications 1 à 7, **caractérisé en ce que** le bain de coagulation contient un alcool et un acide et un ou plusieurs sels métalliques, le sel métallique est de préférence choisi dans le groupe comprenant Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺ à la concentration de 0,01 à 10 N, de préférence, le bain de coagulation contient une solution d'un sel de calcium dans le mélange de 5 à 95% en poids d'alcool, 5 à 95% en poids d'acide et au maximum 10% en poids d'eau.

12. Procédé selon l'une quelconque des revendications 1 à 7, **caractérisé en ce que** la fibre lavée ou la fibre lavée et séchée est introduite dans le bain de métallisation contenant un sel métallique et un alcool pendant la durée de 20 minutes à 21 jours, puis elle est lavée et séchée, le sel métallique est de préférence choisi dans le groupe comprenant acétates, formiates, chlorures, sulfates, fluorures, nitrates et hydrates de ces sels de métaux choisis dans le groupe comprenant Mn²⁺, Ca²⁺, Cr³⁺, Fe²⁺, Fe³⁺, Co²⁺, Co³⁺, Cu²⁺, Zn²⁺ et des mélanges de ceux-ci et l'alcool est choisi dans le groupe comprenant le méthanol, l'éthanol, le 1-propanol, le 2-propanol.

13. Procédé selon la revendication 12, **caractérisé en ce que** le bain de métallisation contient un sel métallique ayant la concentration de 5.10⁻⁵ à 1.10⁻² M, 1 à 99% d'alcool, 1 à 99% en poids d'acide choisi dans le groupe contenant l'acide formique, l'acide acétique, l'acide propionique ou un mélange de ceux-ci, et au maximum 10% en poids d'eau.

14. Procédé selon la revendication 12, **caractérisé en ce que** le bain de métallisation contient un sel métallique ayant la concentration de 5.10⁻⁵ à 1.10⁻¹M, 1 à 99% d'alcool, et au maximum 10% en poids d'eau, le bain de métallisation contient de préférence en outre une base choisie dans le groupe comprenant LiOH, NaOH, KOH, Li₂CO₃, Na₂CO₃, K₂CO₃, LiHCO₃ , NaHCO₃ et KHCO₃ ayant la concentration de 5.10⁻⁵ à 1 N.

15. Procédé selon l'une quelconque des revendications 1 à 7, **caractérisé en ce que** la solution aqueuse de filage contient 0,001 à 10 N de base et de 0,01 à 8% en poids d'acide hyaluronique et / ou un composé de métal de celui-ci, et les fibres d'acide hyaluronique contenant un métal choisi dans le groupe comprenant Li⁺, Na⁺, K⁺, Ca²⁺, Mg²⁺, Mn²⁺, Fe²⁺, Fe³⁺, Co²⁺, Co³⁺, Cu²⁺, Zn²⁺, où la teneur totale maximale de Fe²⁺, Fe³⁺, Co²⁺, Co³⁺, Cu²⁺ et Cr³⁺ dans les fibres de l'acide hyaluronique est 1.10⁻³ % en poids, de préférence les fibres d'acide hyaluronique dans la solution de filage sont les fibres préparées par le procédé selon l'une quelconque des revendications 8 à 14.

16. Procédé selon la revendication 15, **caractérisé en ce que** d'abord une solution d'une base ayant une concentration de 0,001 à 10 N est préparée, puis dans cette solution, les fibres d'acide hyaluronique contenant un métal et l'acide hyaluronique et / ou un composé métallique de celui-ci sont introduites progressivement en remuant de façon à obtenir une solution ayant une concentration totale des fibres d'acide hyaluronique et d'acide hyaluronique et / ou du composé de métal de celui-ci de 0,01 à 8% en poids, puis l'on agite la solution résultante pendant la durée de 20 minutes à 10 heures à une température de 18 à 35°C jusqu'à ce qu'une solution homogène est formée.

17. Une fibre à base d'acide hyaluronique et / ou un composé de métal de celui-ci, **caractérisé en ce qu'il** contient de l'acide hyaluronique et / ou du composé de métal de celui-ci ayant un poids moléculaire dans la gamme de 100 kDa à 3 MDa et que le diamètre de la fibre, monofilament, fibre primaire, est de 4 µm à 1 mm, la densité linéaire est de 0,1 à 30 g / 1000 m (0,1 à 30 tex), la résistance à la traction est de 0,65 à 3 cN.dtex⁻¹ et la résistance de boucle est de 20 à 80% de la résistance à la traction, la fibre contient de préférence en outre un métal choisi dans le groupe comprenant Li⁺, Na⁺, K⁺, Ca²⁺, Mg²⁺, Cr³⁺, Mn²⁺, Fe²⁺, Fe³⁺, Co²⁺, Co³⁺, Cu²⁺, Zn²⁺

18. Un câble de soie qui contient de 2 à 50 fibres primaires ayant un diamètre de 4 µm à 1 mm, la densité linéaire de 0,1 à 30 g / 1000 m (0,1 à 30 tex), la résistance à la traction de 0, 65 à 3 cN.dtex⁻¹ et la résistance de la boucle de 20 à 80% de la résistance à la traction.

19. L'utilisation de la fibre ayant un diamètre de 4 µm à 1 mm, la densité linéaire de 0,1 à 30 g / 1000 m (0,1 à 30 tex), la résistance à la traction de 0,65 à 3 cN.dtex⁻¹ et la résistance de la boucle de 20 à 80% de la résistance à la traction et / ou un câble de soie contenant des fibres ayant un diamètre de 4 µm à 1 mm, la densité linéaire de 0,1 à 30 g / 1000 m (0,1 à 30 tex), la résistance à la traction de 0,65 à 3 cN.dtex⁻¹ et la résistance de la boucle de 20 à 80% de la résistance à la traction pour la production de tissus tissés ou non-tissés.
